# EUROPEAN PATENT SPECIFICATION

(11) **EP 2 818 801 B1**
(45) Date of publication and mention of the grant of the patent: **08.03.2017**
(21) Application number: 12846798.2
(22) Date of filing: 22.11.2012
(51) Int. Cl.: G06Q 10/06, F24D 10/00, F24D 19/10, G05D 23/19

(54) **METHOD AND DEVICE FOR CONTROLLING HEATER DEVICES**
STEUERVERFAHREN FÜR EINE ERWÄRMUNGSVORRICHTUNG UND STEUERVORRICHTUNG FÜR EINE ERWÄRMUNGSVORRICHTUNG
PROCÉDÉ ET DISPOSITIF PERMETTANT DE COMMANDER DES DISPOSITIFS DE CHAUFFAGE

(30) Priority: 21.02.2012 JP 2012035269
(43) Date of publication of application: 31.12.2014
(73) Proprietor: Panasonic Intellectual Property Management Co., Ltd., Osaka-shi, Osaka 540-6207 (JP)
(72) Inventor: KAKIMOTO, Atsushi, Chuo-ku, Osaka 540-6207 (JP)
(74) Representative: Grünecker Patent- und Rechtsanwälte PartG mbB
(86) International application number: PCT/JP2012/007529
(87) International publication number: WO 2013/124933

(56) References cited:
- WO-A1-02/27687
- DE-A1- 4 221 094
- DE-A1- 4 404 272
- JP-A- S5 585 842
- JP-A- H01 134 133
- JP-A- H04 131 600
- JP-A- 2004 116 947
- JP-A- 2004 264 010
- JP-A- 2011 021 872

## Description

### [Technical Field]

The present invention relates to methods of controlling heating devices that use hot water, and particularly to a method of controlling a plurality of heating devices such as radiators and floor heaters.

### [Background Art]

Patent Literature 1 discloses a conventional hot-water heating device. The hot-water heating device disclosed in Patent Literature 1 controls a room temperature of each room by supplying hot water from a boiler to a radiator provided for the room. The flow rate of hot water to be supplied to the radiator can be adjusted by a valve. The valve includes a radio receiver and adjusts the flow rate of hot water according to a radio signal received from a remote control.

Patent Literature 1 discloses the following features of independent claims 1 and 11 of the present invention: a control method/device of controlling a heating device which radiates, according to an operation plan, heat supplied from a heat supply source.

### [Citation List]

### [Patent Literature]

[PTL 1]
DE4221094A1

### [Summary of Invention]

### [Technical Problem]

Patent Literature 1, however, only discloses that the temperatures of the rooms can be individually controlled and does not disclose heat control for overall optimization of a housing complex.

In view of this, the present invention has an object to provide a heating-device control method and a heating-device control device that reduce the total amount of heat consumed during a particular time period and also effectively prevent a peak in the total heat consumption from occurring immediately after the end of reduction made in the total heat consumption.

### [Solution to Problem]

The heating-device control method according to the present invention is defined in claim 1.

With the above method, the total amount of heat consumed during the heat radiation reduction period can be reduced and, at the same time, a peak in the total heat consumption can be effectively prevented from occurring immediately after the end of the heat consumption reduction period.

Moreover, the heating-device control method may further includes grouping the heating devices into the groups by classifying each of the heating devices into one of the groups according to an amount of heat consumption obtained from the heating device.

As an example, in the grouping: an amount of group heat consumption may be calculated for each of the groups, the amount of group heat consumption being a sum of amounts of heat consumed by the heating devices belonging to the group; and the heating devices may be grouped into the groups to allow a difference in the amount of group heat consumption between the groups to be smaller than a predetermined threshold.

Moreover, in the forming, the operation plan may be formed for each of the groups to allow, as the heating devices belonging to a first group included in the groups resume heat radiation, heat radiation of the heating devices belonging to a second group different from the first group to be stopped.

As another example, in the grouping, a heating device that is included in the heating devices and consumes an amount of heat larger than a predetermined threshold may be classified into a first group and a heating device that is included in the heating devices and consumes an amount of heat smaller than or equal to the predetermined threshold may be classified into a second group.

Moreover, in the forming, the operation plan may be formed for each of the groups to allow, as the heating device belonging to the first group returns to a steady state after heat radiation is resumed, heat radiation of the heating device belonging to the second group to be stopped.

Furthermore, in the grouping, each of the heating devices may be classified into one of the groups according to the amount of heat consumption measured when the heat radiation reduction instruction is obtained in the obtaining.

Moreover, in the grouping, each of the heating devices may be classified into one of the groups according to the amount of heat consumption during the heat radiation reduction period of a day on which circumstances are similar to circumstances of a current day, the amount of heat consumption being included in a history of previous amounts of heat consumption.

Furthermore, in the grouping, each of the heating devices may be classified into one of the groups according to the amount of heat consumption during a late night period of a day on which circumstances are similar to circumstances of a current day, the amount of heat consumption being included in a history of previous amounts of heat consumption.

Moreover, in the grouping, each of the heating devices may be classified into one of the groups according to the amount of heat consumption on a coldest day, the amount of heat consumption being included in a history of previous amounts of heat consumption.

The control device according to the present invention is defined in claim 11.

The heating-system control device in an aspect according to the present invention controls heating devices each of which radiates, according to an operation plan, heat supplied from a heat supply source. To be more specific, the heating-system control device includes: an obtainment unit which obtains, from the heat supply source, a heat radiation reduction instruction indicating a heat radiation reduction period during which a total heat consumption is to be reduced, the total heat consumption being a sum of amounts of heat consumed by the heating devices; an operation planning unit which forms the operation plan of the heating devices for each of groups when the heat radiation reduction instruction is obtained by the obtainment unit, each of the groups including at least one of the heating devices; and a notification unit which notifies each of control units included in the heating devices of the operation plan formed for each of the groups by the operation planning unit. The heating-system control device includes an operation control unit which controls operations of the heating devices for each of the groups individually according to the operation plan formed by the operation planning unit for each of the groups. The operation planning unit forms, for each of the groups, the operation plan including information indicating a heat radiation stop time and a heat radiation resume time, to allow (i) the total heat consumption during the heat radiation reduction period to be reduced and (ii) the heat radiation resume times of the groups not to coincide with each other.

As an example, the heating-system control device may include: a first control device including the obtainment unit and the operation planning unit; and a second control device that includes the operation control unit and is provided for each of the heating devices.

### [Advantageous Effects of Invention]

With the present invention, by controlling the heating devices according to the operation plan formed for each group, the total amount of heat consumed during the heat radiation reduction period can be reduced and, at the same time, a peak in the total amount of heat consumption can be effectively prevented from occurring immediately after the end of the heat radiation reduction period.

### [Brief Description of Drawings]

[Fig. 1]

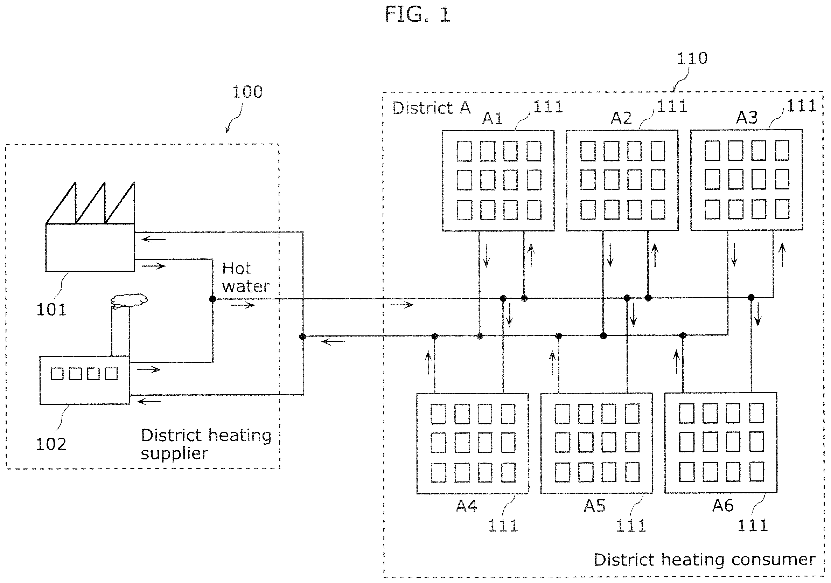

   FIG. 1 is a schematic diagram explaining the working of district heating supply.
[Fig. 2]

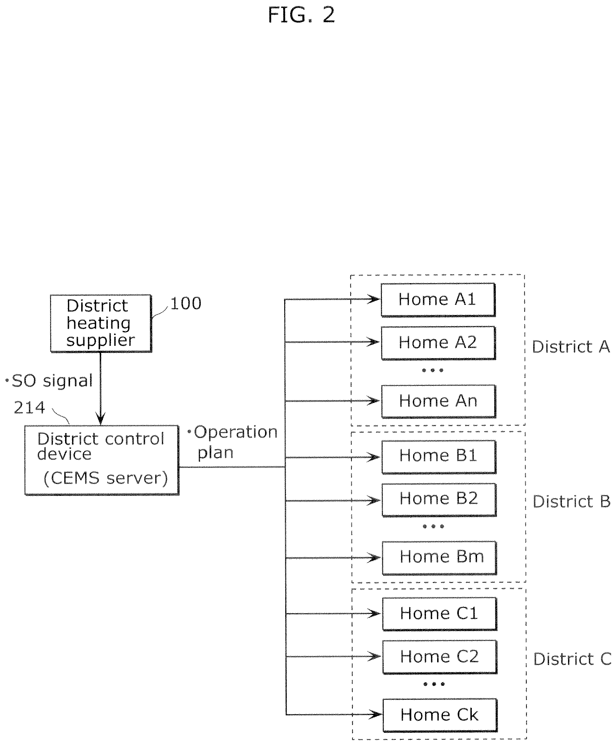

   FIG. 2 is a schematic diagram showing an overall configuration of a heating system in an aspect according to the present invention.
[Fig. 3]

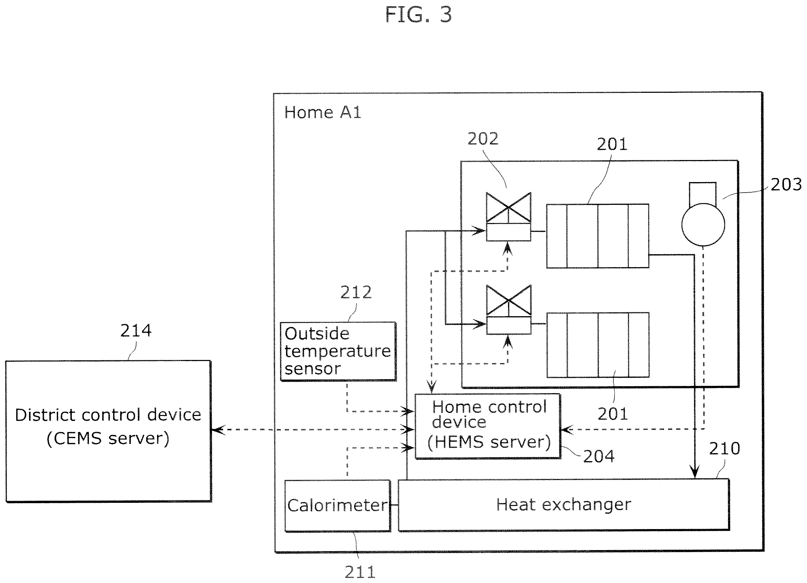

   FIG. 3 is a diagram showing an example of a facility provided for each home.
[Fig. 4A]

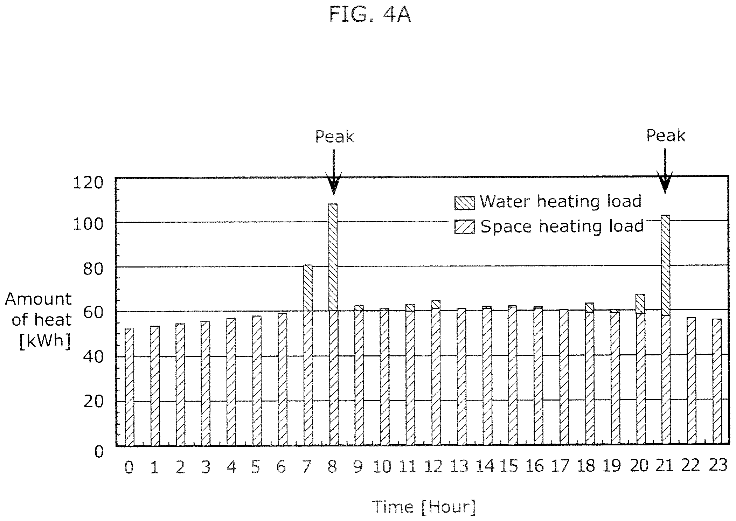

   FIG. 4A is a diagram showing changes in the amount of heat consumed by a district heating consumer.
[FIG. 4B]

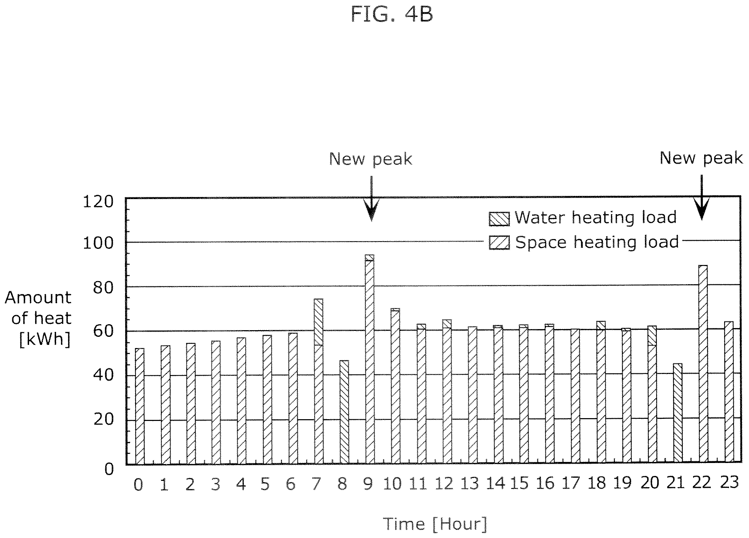

   FIG. 4B is a diagram showing changes in the amount of heat consumed in the case where heating devices are stopped during peak time periods shown in FIG. 4A.
[Fig. 5]

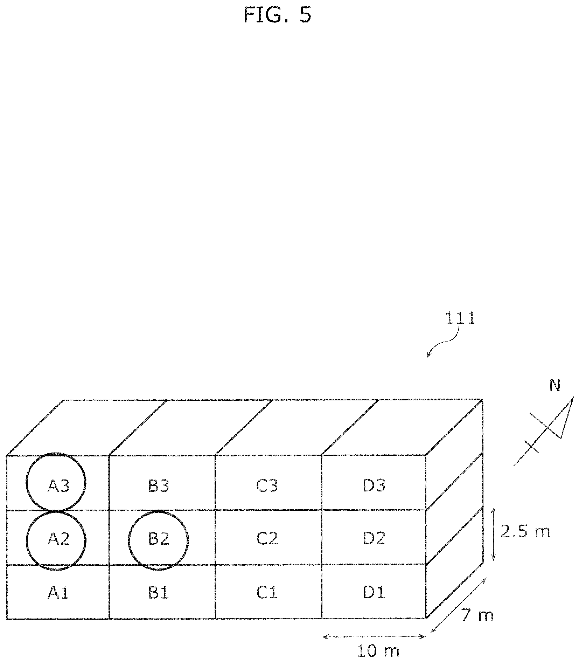

   FIG. 5 is a diagram showing an example of a housing complex.
[Fig. 6]

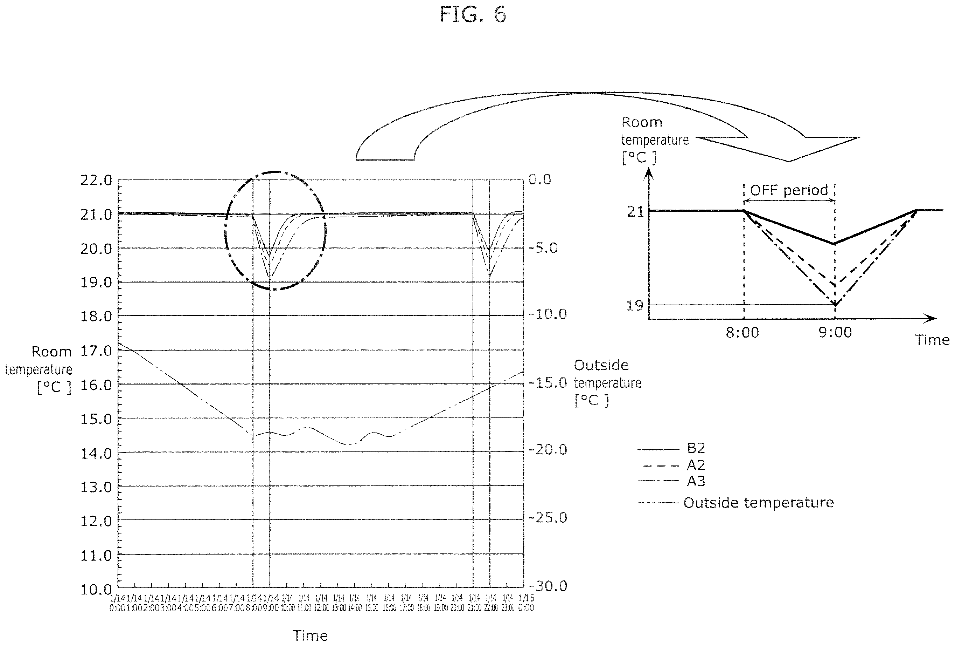

   FIG. 6 is a diagram showing changes in the room temperature for each of rooms included in the housing complex shown in FIG. 5.
[FIG. 7]

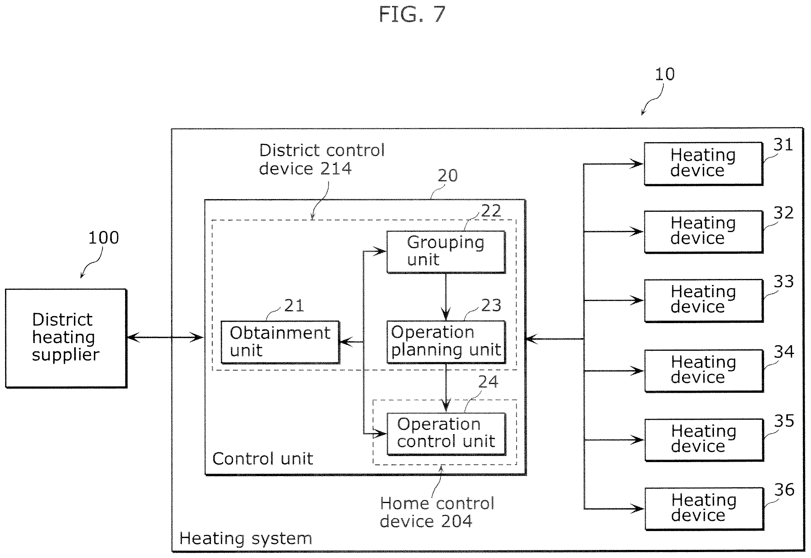

   FIG. 7 is a schematic block diagram showing a heating system in Embodiment 1.
[FIG. 8]

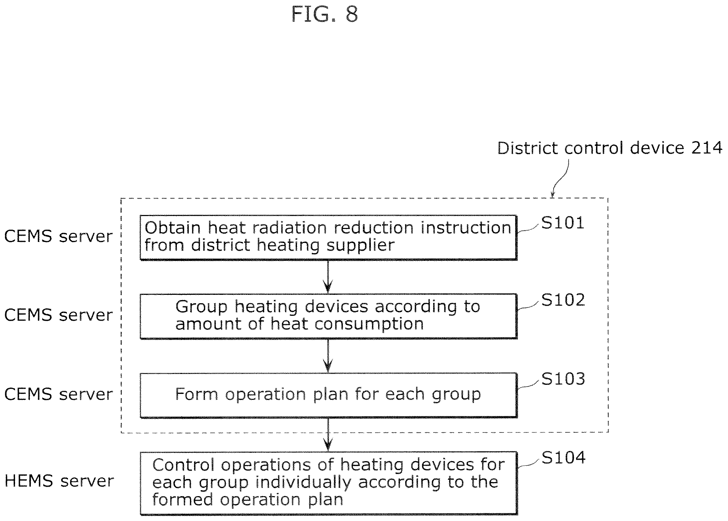

   FIG. 8 is a flowchart showing a process of controlling the heating system in Embodiment 1.
[Fig. 9]

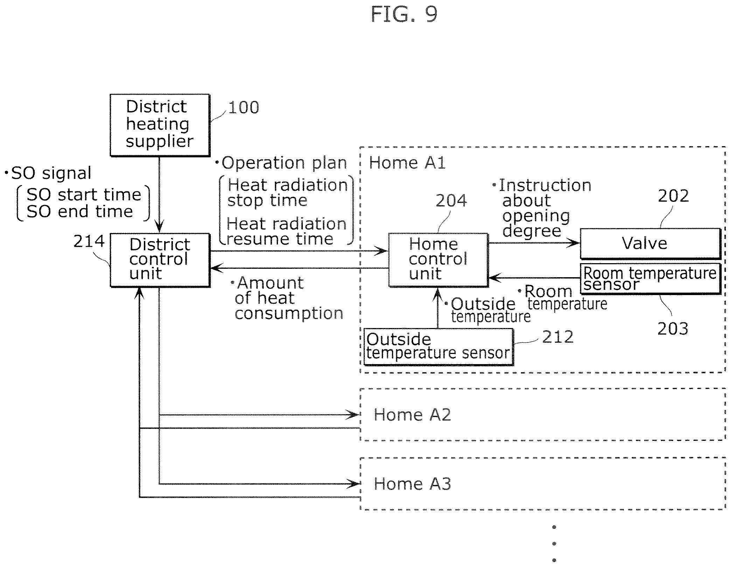

   FIG. 9 is a diagram showing an example of information transmitted and received in the heating system in Embodiment 1.
[Fig. 10]

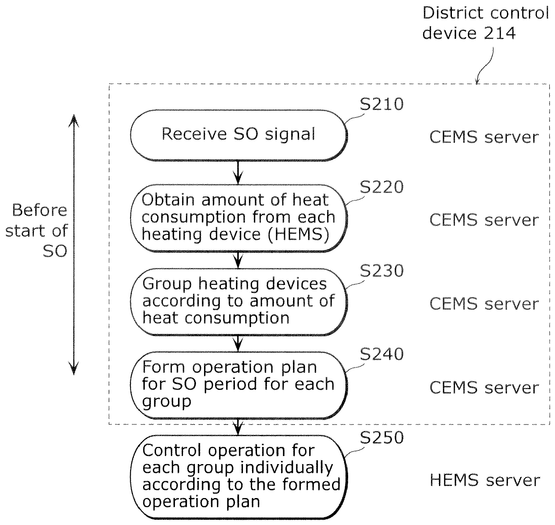

   FIG. 10 is a flowchart showing a heating-system control method in Embodiment 1.
[Fig. 11]

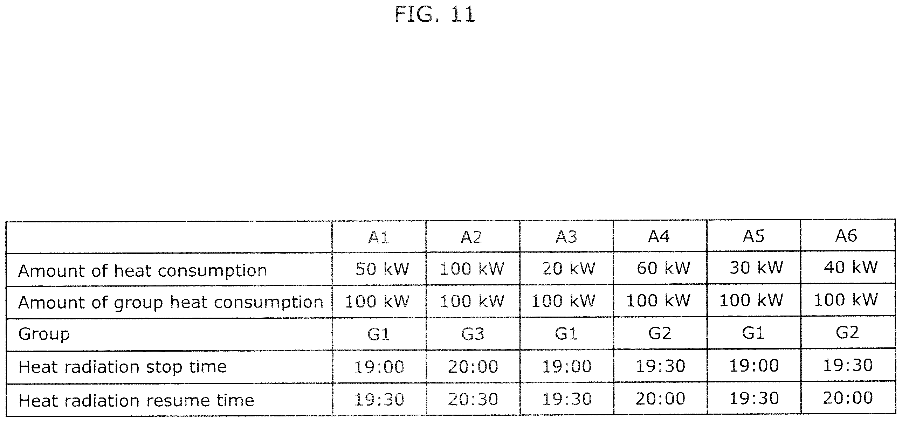

   FIG. 11 is a diagram showing an example of grouping in Embodiment 1.
[FIG. 12]

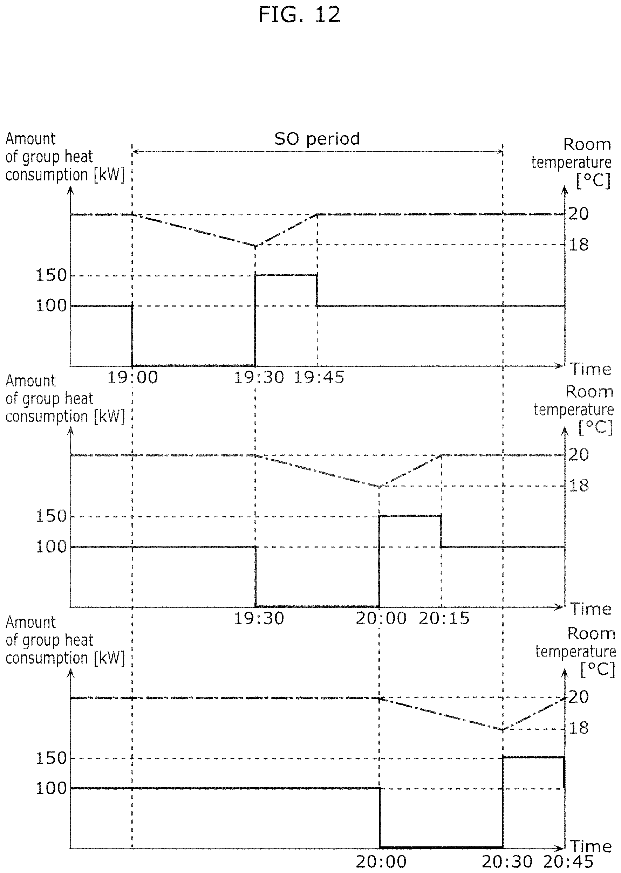

   FIG. 12 is a diagram showing an example of changes in the amount of group heat consumption for each group in Embodiment 1.
[Fig. 13]

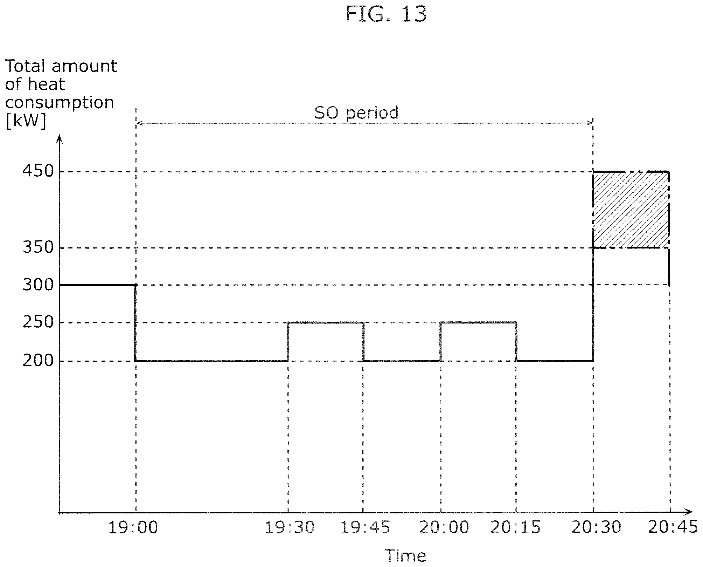

   FIG. 13 is a diagram showing an example of changes in the total amount of heat consumed by the heating system in Embodiment 1.
[Fig. 14]

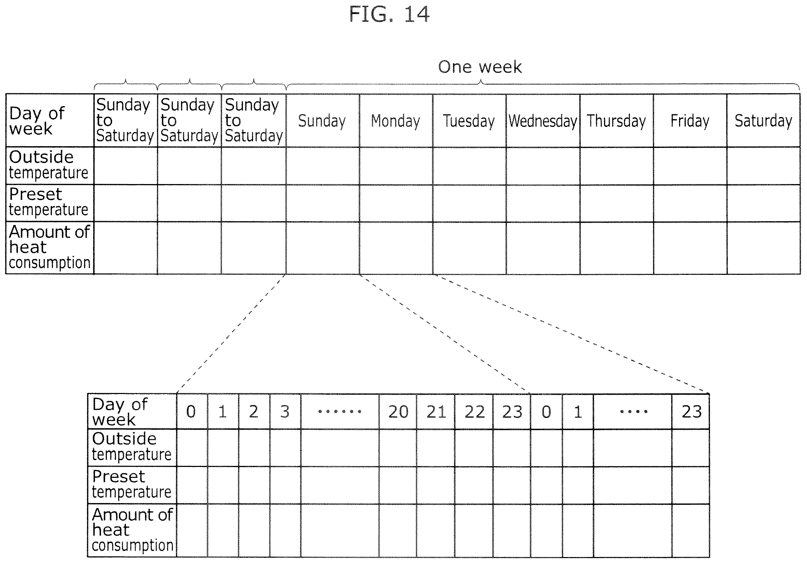

   FIG. 14 is a diagram showing an example of a structure of historical data on heat consumption held by a home control device in Modification 1.
[FIG. 15]

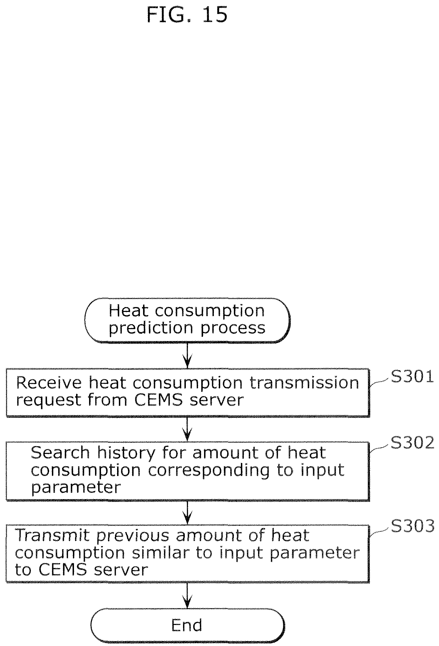

   FIG. 15 is a flowchart showing an operation performed when the home control device receives a heat consumption transmission request in Modification 1.
[FIG. 16]

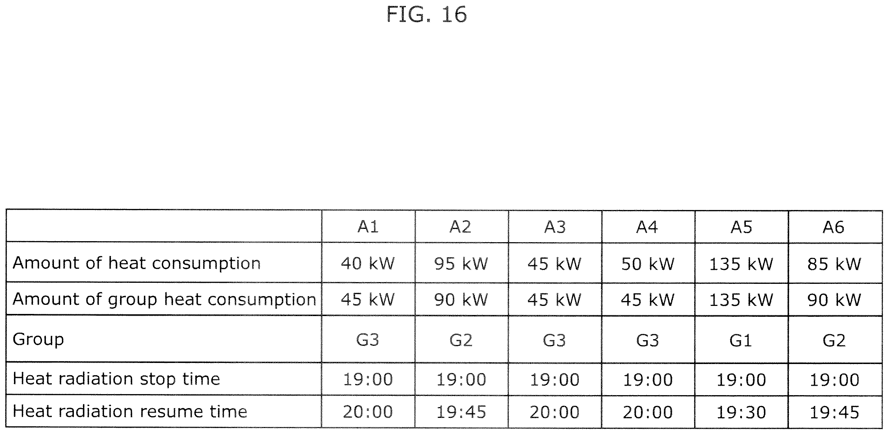

   FIG. 16 is a diagram showing an example of grouping in Embodiment 2.
[FIG. 17]

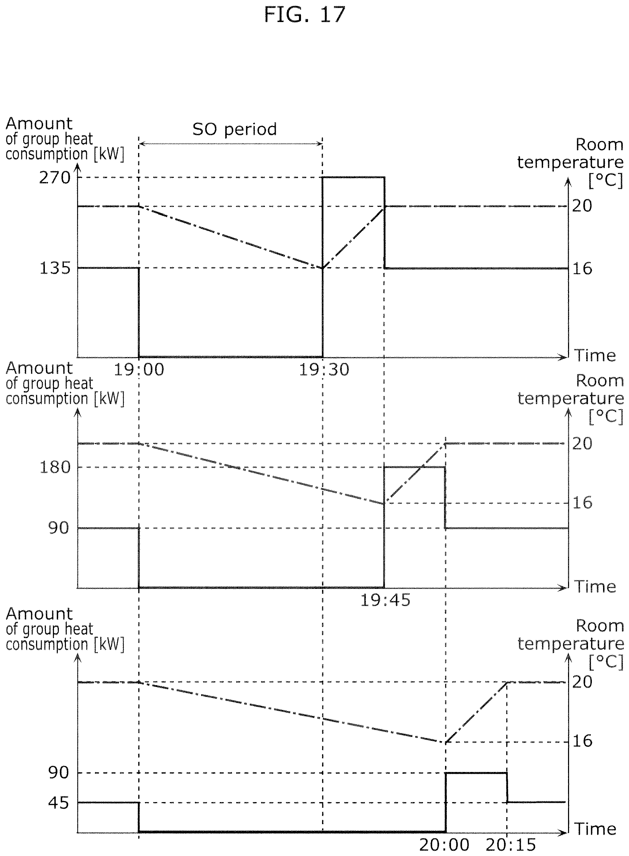

   FIG. 17 is a diagram showing an example of changes in the amount of group heat consumption for each group in Embodiment 2.
[Fig. 18]

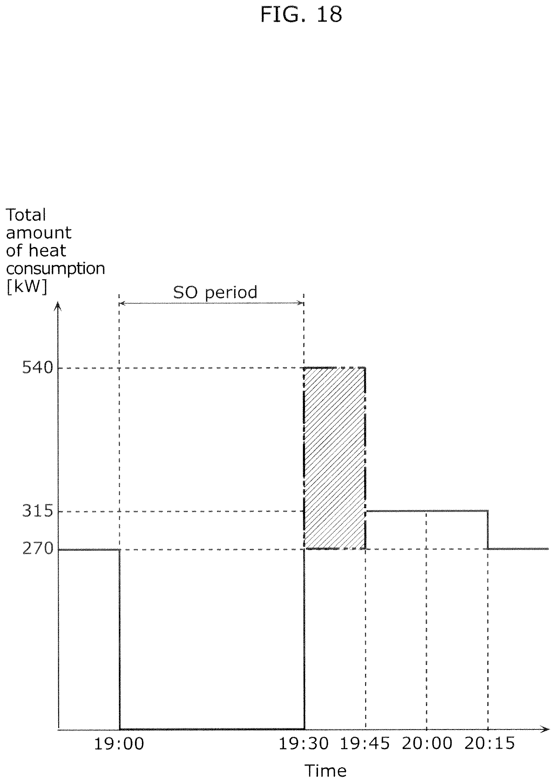

   FIG. 18 is a diagram showing an example of changes in the total amount of heat consumed by a heating system in Embodiment 2.

### [Description of Embodiments]

The following is a description of a heating system and a heating-system control method in an aspect according to the present invention, with reference to the drawings. The present invention is determined only by the scope of the appended Claims. Thus, among the structural elements described in Embodiments below, the structural elements that are not recited in the Claims are not necessarily required to achieve the object in the present invention. To be more specific, Embodiments described below merely explain more preferred embodiments. It should also be noted that each of the drawings is schematic and thus does not necessarily show an exact illustration.

Firstly, an environment (an infrastructure) to which a heating system in an aspect according to the present invention is applied is explained with reference to FIG. 1. FIG. 1 is a schematic diagram explaining the working of district heating supply, and illustrates that hot water is circulating between a district heating supplier (heat supply source) 100 and a district heating consumer 110.

The district heating supplier 100 is a company that generates heat during operation. The district heating supplier 100 includes, as examples, a factory 101 and an electric power plant 102. To be more specific, each of the factory 101 and the electric power plant 102 shown in FIG. 1 releases hot water generated using waste heat produced during operation (for example, pressurized hot water at 110°C) to a flow channel.

In the above example, hot water is generated using waste heat. However, note that the example is not limited to this. A facility intended for generating hot water to be supplied to the district heating consumer 110 can also be included in the district heating supplier 100. Moreover, it should be obvious that the example is not limited to man-made heat and that hot water may be generated using, for example, geothermal heat. More specifically, the district heating supplier 100 is not limited to the example shown in FIG. 1 and thus includes every facility capable of stably generate and supply hot water.

The district heating consumer 110 is a facility that employs hot water generated by the district heating supplier 100. The district heating consumer 110 includes, as examples, a detached house (an illustration thereof is omitted) and a housing complex 111. To be more specific, heat of hot water generated by the district heating supplier 100 is consumed by, for example, heating devices and water heaters provided in the detached house and in rooms included in the housing complex 111. Then, the water flows back to the district heating supplier 100. It should be noted that the district heating consumer 110 is not limited to the example shown in FIG. 1 and includes every facility that consumes heat, such as an office, a store, a school, and a hospital.

A configuration of the heating system in an aspect according to the present invention is described, with reference to FIG. 2 and FIG. 3. FIG. 2 is a schematic diagram showing an overall configuration of the heating system in an aspect according to the present invention. FIG. 3 is a diagram showing an example of a facility provided for a home A1 included in the heating system.

As shown in FIG. 2, the heating system includes the district heating supplier 100, a district control device 214, and a plurality of homes (heating devices). It should be noted that, in the present specification and drawings, the district control device 214 may also be referred to as the "community energy management system (CEMS)". Note also that, in the present specification and drawings, the terms "home", "room", and "heating device" may be used interchangeably. For example, the term "home" may refer to the "heating device provided in the home".

The district control device 214 controls operations performed by the heating devices, and manages at least one district (three districts A, B, and C in the example shown in FIG. 2). Each of the districts includes a plurality of homes, and each of the homes includes at least one heating device. To be more specific, the district control device 214 obtains, from the district heating supplier 100, an SO signal that requests a reduction in the total amount of heat consumed by the whole heating system. Then, the district control device 214 forms, for each group, an operation plan of the heating devices for a time period indicated by the SO signal (referred to as the "heat radiation reduction period" or the "SO period" hereafter). The district control device 214 then notifies each of the homes of the formed operation plan.

Here, the term "group" refers to a set including at least one home (heating device). According to the method described later, the district control device 214 performs grouping. For example, each of the districts A, B, and C may be one group. Moreover, each of the districts A, B, and C may be further divided into subgroups. Furthermore, the homes belonging to the different districts may be grouped into the same group.

As shown in FIG. 3, the home A1 includes a radiator 201, a valve 202, a room temperature sensor 203, a home control device 204, a heat exchanger 210, a calorimeter 211, and an outside temperature sensor 212. It should be noted that, in FIG. 3, a solid arrow indicates the flow of hot water and a dashed arrow indicates the flow of information (signal). In the present specification and drawings, the home control device 204 may also be referred to as the home EMS (HEMS) server hereafter. Since all the homes shown in FIG. 2 have the same configuration, the following describes only the home A1.

The radiator 201 heats the corresponding room by radiating heat of hot water supplied from the heat exchanger 210. It should be noted that the radiator 201 may radiate heat of hot water into the air or may heat the floor of the room with heat of hot water to implement floor heating. One radiator 201 may be provided for each of the rooms. Or, a plurality of radiators 201 (two radiators in the example shown in FIG. 3) may be provided for each of the rooms.

The valve 202 controls the flow rate (i.e., the amount of heat) of hot water flowing from the heat exchanger 210 to the radiator 201. The valve 202 has a function of communicating with the home control device 204 and can change the flow rate according to an instruction received from the home control device 204. For example, as disclosed in Patent Literature 1, the valve including the radio receiver (Thermostatic Radiator Valve: TRV) may be used. One valve 202 may control the flow rate of hot water flowing into one radiator 201. Or, one valve 202 may control the flow rates of hot water flowing into a plurality of radiators 201.

The room temperature sensor 203 detects the room temperature of the corresponding room and notifies the home control device 204 of the detected room temperature.

The home control device 204 controls the radiator 201 and the valve 202 (collectively referred to as the "heating device" hereafter) provided in the corresponding room. To be more specific, by exchanging information with the district control device 214, the home control device 204 controls the operation of the heating device during the SO period according to the instruction received from the district control device 214. During time periods other than the SO period, the home control device 204 controls the operation of the heating device so as to allow the room temperature of the room to be closer to a user preset temperature.

The home control device 204 can select an OFF mode, a first mode, or a second mode as an operation mode of the heating device. In the OFF mode, heat radiation is completely stopped (or, only minimum heat required to maintain the function of the heating system is radiated). In the first mode, heat required to increase the temperature of the room to the preset temperature is radiated. In the second mode, heat required to maintain the current temperature of the room is radiated.

The home control device 204 can switch interchangeably between the above-described modes, by controlling the flow rate of hot water supplied to the radiator 201 via the valve 202. More specifically, the amount of hot water (the amount of heat) supplied to the radiator 201 when the first mode is selected is larger than the amount of hot water (the amount of heat) supplied to the radiator 201 when the second mode is selected.

The heat exchanger 210 causes heat exchange to be performed between: hot water circulating between the district heating supplier 100 and the heat exchanger 210; and hot water circulating between the heat exchanger 210 and the radiator 201. The heat exchanger 210 is typically provided in the basement of the housing complex 111. To be more specific, the heat exchanger 210 performs heat exchange between high-temperature hot water flowing from the district heating supplier 100 and low-temperature hot water flowing from the radiator 201. Then, hot water having a decreased temperature flows back to the district heating supplier 100 from the heat exchanger 210, and hot water having an increased temperature flows back to each of the rooms from the heat exchanger 210.

The calorimeter 211 measures the amount of heat exchanged by the heat exchanger 210. To be more specific, the calorimeter 211 measures a temperature of the high-temperature hot water flowing from the district heating supplier 100 to the heat exchanger 210 (a first temperature) and a temperature of the low-temperature hot water flowing back to the district heating supplier 100 from the heat exchanger 210 (a second temperature). Then, by multiplying a difference between the first and second temperatures by the flow rate of hot water flowing into the heat exchanger 210, the calorimeter 211 measures the amount of heat exchanged by the heat exchanger 210. It should be noted that the amount of heat measured by the calorimeter 211 is used for, for example, calculating a usage fee of district heat to be charged to the housing complex 111.

The outside temperature sensor 212 detects an outside temperature around the housing complex 111, and then notifies the home control device 204 of the detected outside temperature.

With the configuration described above, the heating system in an aspect according to the present invention is controlled by the hierarchical control devices. Each of FIG. 2 and FIG. 3 shows the example of a two-level hierarchical structure including the home control device 204 provided for each of the homes (the heating devices) and the district control device 214 controlling the heating devices. However, the present invention is not limited to this. For example, in the case of a housing complex having a plurality of rooms, the hierarchical structure may have three levels which are "HEMS" provided for each room, "Building EMS (BMES)" controlling the whole housing complex (building), and "CEMS" controlling the whole heating system.

Next, a problem of the above-described district heating supply is explained with reference to FIG. 4A, FIG. 4B, FIG. 5, and FIG. 6. Each of FIG. 4A and FIG. 4B is a diagram showing changes in the amount of heat consumed by the district heating consumer 110 shown in FIG. 1. FIG. 5 is a diagram showing an example of the housing complex 111. FIG. 6 is a diagram showing changes in the room temperature for each of rooms included in the housing complex 111 shown in FIG. 5.

In a cold climate area, for example, the amount of heat consumed by a heating device (referred to as the "space heating load" hereafter) of a housing complex is almost constant throughout the day, as shown in FIG. 4A. On the other hand, the amount of heat consumed by a water heater (referred to as the "water heating load" hereafter) is concentrated during regular time periods of the day (8:00 to 9:00 and 21:00 to 22:00, in the example shown in FIG. 4A). The water heater hardly consumes heat during the other time periods. On account of this, in the example shown in FIG. 4A, the heat consumption reaches peaks during the time periods where the water heating load is concentrated (such a time period is referred to as the "peak time period" hereafter).

For the case where a peak occurs in the heat consumption as in FIG. 4A, the district heating supplier 100 needs to have a heat generating ability corresponding to this peak. Moreover, in order to supply a sufficient amount of hot water during the peak time periods, the district heating supplier 100 may possibly have to generate heat using a relatively expensive fuel (such as fossil fuel).

In order to solve the above problem, causing all the heating devices to stop operations during the peak time periods is one idea. With this, the space heating loads during the peak time periods are reduced to zero as shown in FIG. 4B, thereby leveling out the peaks of the heat consumption.

However, even when the operations of all the heating devices are stopped during the peak time periods, another problem arises as follows. For example, suppose that the housing complex 111 which is three stories high includes four rooms for each floor, i.e., 12 rooms in total, as shown in FIG. 5. Generally, heat insulation performance (heat radiation performance) is different for each room, depending on the location of the room. To be more specific: a room A3 has four sides exposed to the outside, out of six sides; a room A2 has three sides exposed to the outside, out of six sides; and a room B2 has two sides exposed to the outside, out of six sides. In this case, the room B2 has the highest heat insulation performance followed by the room A2, and the room A3 has the lowest heat insulation performance.

On account of this, even when the operations of the heating devices provided in the rooms A2, A3, and B2 are stopped at the same time, changes in the room temperature vary from room to room. For example, FIG. 6 shows simulation results of the changes in the room temperature of the rooms A2, A3, and B2 when the operations of the heating devices are stopped from 8:00 to 9:00 (indicated as "OFF period" in FIG. 6). Here, it should be noted that each of the rooms included in the housing complex 111 is 10 meters wide, 7 meters long, and 2.5 meters high. Moreover, note that the changes in the outside temperature which are assumptions in the simulation are also shown in FIG. 6.

As is clear from FIG. 6, the room temperatures of the rooms A2, A3, and B2 decrease monotonically during the OFF period. Here, the rate of decrease in the temperature of the room A3 which has the lowest heat insulation performance is the highest, and the rate of decrease in the temperature of the room B2 which has the lowest heat insulation performance is the lowest. More specifically, at 9:00 which the end time of the OFF period, the temperature of the room A3 is the lowest and the temperature of the room B3 is the highest. In this way, as a result of equally stopping the operations of the heating devices in all the rooms at the same time, the comfort level varies greatly from room to room.

Moreover, at 9:00 which is the end time of the OFF period, the heating devices of all the rooms resume the operations at once in order to increase the room temperatures of the rooms back up to initial preset temperatures. This results in new peaks occurring during time periods (9:00 to 10:00 and 22:00 to 23:00) immediately after the original peak time periods (8:00 to 9:00 and 21:00 to 22:00).

### [Embodiment 1]

The following describes examples of a heating system and a heating-system control method to solve the above problems, with reference to FIG. 7 and FIG. 8. FIG. 7 is a schematic block diagram showing the heating system in Embodiment 1. FIG. 8 a flowchart showing a process of controlling the heating system in Embodiment 1.

As shown in FIG. 7, a heating system 10 in an aspect according to the present invention includes a control unit 20 and a plurality of heating devices 31, 32, 33, 34, 35, and 36. Each of the heating devices 31 to 36 is provided in a different home (room) and heats the corresponding room by radiating heat supplied from the district heating supplier 100. The following assumes that the heating devices 31 to 36 are provided, respectively, in the homes A1 to A6 shown in FIG. 2.

The control unit 20 exchanges information with the district heating supplier 100 and also controls operations of the heating devices 31 to 36 individually. To be more specific, the control unit 20 includes an obtainment unit 21, a grouping unit 22, an operation planning unit 23, and an operation control unit 24.

The obtainment unit 21 obtains a heat radiation reduction instruction (referred to as the "shut off (SO) signal" hereafter) from the district heating supplier 100 (S101). Moreover, the obtainment unit 21 obtains the amount of heat consumption and the room temperature for each room from the heating devices 31 to 36. The obtainment unit 21 also obtains the outside temperature around the room from an outside temperature sensor (an illustration thereof is omitted in FIG. 5).

It should be noted that the SO signal refers to a signal that requests a reduction in the total amount of heat consumed by the heating devices 31 to 36 (the total heat consumption). The SO signal includes information specifying a time period during which the amount of heat consumption is to be reduced (referred to as the "SO period" hereafter). More specifically, the SO signal includes information specifying a start time of the SO period (referred to as the "SO start time" hereafter which is 8:00 in the example shown in FIG. 6) and an end time of the SO period (referred to as the "SO end time" hereafter which is 9:00 in the example shown in FIG. 6).

The grouping unit 22 groups the heating devices 31 to 36 (S102). To be more specific, the grouping unit 22 classifies each of the heating devices 31 to 36 into one of groups according to the amounts of heat consumption of the heating devices 31 to 36 obtained by the obtainment unit 21. The meaning of the term "grouping" used here means as follows. When the number of groups is, for example, three, each of the heating devices 31 to 36 is classified into one of the three groups. A specific grouping method is described later.

The operation planning unit 23 forms an operation plan of the heating devices 31 to 36 for each group, according to the SO signal obtained by the obtainment unit 21 (S103). For example, when the number of groups is three, the operation plan is formed individually for each of the three groups.

The operation planning unit 23 forms the operation plan for each of the groups so as to allow the total heat consumption during the SO period to be reduced and also to allow a peak in the total heat consumption immediately after the SO end time to be lowered. To be more specific, according to the operation plan formed by the district control device 214 for each of the groups, heat radiation of the heating devices is temporarily stopped at any time (which may be the same for all the groups or different for each of the groups) during the SO period. Then, heat radiation of the heating devices is resumed at the time that is different for each of the groups (the time may be set during the SO period or after the SO end time), according to the operation plan. A specific example of the operation plan is described later. The operation planning unit 23 notifies the operation control unit 24 of the formed operation plan.

The operation control unit 24 receives the operation plan from the operation planning unit 23, and thus controls the operations (the amounts of heat radiation) of the heating devices 31 to 36. More specifically, the operation control unit 24 controls each of the operations of the heating devices 31 to 36 according to the operation plan formed for each of the groups by the operation planning unit 23 (S104).

It should be noted that the functions of the obtainment unit 21, the grouping unit 22, and the operation planning unit 23 shown in FIG. 7 are implemented in the district control device 214 shown in FIG. 3. The function of the operation control unit 24 shown in FIG. 7 is implemented in the home control device 204 shown in FIG. 3. In this case, the district control device 214 further includes a notification unit (an illustration thereof is omitted) that notifies, to each of the home control devices 204, the operation plan formed for each of the groups by the operation planning unit 23. However, this division of roles is merely an example, and the present invention is not limited to this.

Next, the following describes an operation of the heating system in Embodiment 1 with reference to FIG. 9 to FIG. 13. FIG. 9 is a diagram showing an example of information transmitted and received in the heating system in Embodiment 1. FIG. 10 is a flowchart showing the heating-system control method in Embodiment 1. FIG. 11 is diagram showing an example of grouping in Embodiment 1. FIG. 12 is a diagram showing changes in the amount of group heat consumption for each of the groups in Embodiment 1. FIG. 13 is a diagram showing an example of changes in the total amount of heat consumed by the heating system in Embodiment 1.

The district heating supplier 100 transmits the SO signal to the district control device 214. The SO signal includes information specifying the SO start time and the SO end time. Here, examples of the "information specifying the SO start time and the SO end time" are not particularly limited. For example, the information may simply indicate the SO start time and the SO end time, like "SO start time: 19:00, SO end time: 21:00". Or, the information may indicate the SO start time and the length of the SO period, like "SO start time: 19:00, SO period: 2 hours".

The district control device 214 receives the SO signal from the district heating supplier 100. After this, the district control device 214 receives the amount of heat consumption from each of the home control devices 204 of the homes. Following this, the district control device 214 transmits the operation plan to each of the home control devices 204 of the homes.

The operation plan includes information indicating: a time to stop heat radiation of the heating device (the heat radiation stop time); and a time to resume heat radiation after heat radiation is stopped (the heat radiation resume time). The manner in which the heat radiation stop time and the heat radiation resume time are specified is not particularly limited. For example, as in the same manner as described above in the case of the SO signal, the times may be specified as "Heat radiation stop time: 19:00, Heat radiation resume time: 19:30".

The following describes a specific method of grouping the heating devices.

Suppose that each of the preset room temperatures of the homes A1 to A6 is 20°C, and that each of the home control devices 204 of the homes maintains the room temperature at 20°C by causing the heating device to operate in the second mode. In this state, the district control device 214 (the obtainment unit 21 shown in FIG. 7) receives the SO signal from the district heating supplier 100 (S210 in FIG. 10). In the following, suppose that the SO start time indicated by the SO signal is 19:00 and that the SO end time indicated by the SO signal is 20:30. Suppose also that the district control device 214 receives the SO signal a predetermined time period before the SO start time (for example, at 17:00 that is two hours before).

Next, the district control device 214 (the obtainment unit 21 shown in FIG. 7) transmits a request for transmission of the heat consumption of the heating device (the heat consumption transmission request) to each of the home control devices 204 of the homes A1 to A6. The district control device 214 then receives the amount of heat consumption in response to the request (S220). The amount of heat consumption obtained by the district control device 214 in Embodiment 1 is an actual value measured at the point in time when the home control device 204 receives the heat consumption transmission request (in other words, at 17:00 when the district control device 214 receives the SO signal).

In the present example as shown in FIG. 11: the amount of heat consumed by the home A1 is 50 kW; the amount of heat consumed by the home A2 is 100 kW; the amount of heat consumed by the home A3 is 20 kW; the amount of heat consumed by the home A4 is 60 kW; the amount of heat consumed by the home A5 is 30 kW; and the amount of heat consumed by the home A6 is 40 kW. FIG. 11 shows the following for each of the homes: the amount of heat consumption measured at 17:00; the group to which the room belongs; the heat radiation stop time; and the heat radiation resume time.

Next, the district control device 214 (the grouping unit 22 shown in FIG. 7) groups the homes A1 to A6 according to the amounts of heat consumption of the homes A1 to A6 obtained in Step S220 (S230). In Embodiment 1, each of the homes A1 to A6 is classified into one of the groups so as to allow a difference in the amount of group heat consumption between the groups to be at a minimum. It should be noted that the term "the amount of group heat consumption" used in Embodiment 1 refers to the total amount of heat consumed by at least one heating device belonging to one group.

In the example shown in FIG. 11, each of the homes A1 to A6 is classified into one of groups G1, G2, and G3 according to the amount of heat consumption. To be more specific: the homes A1, A3, and A5 are classified into the group G1; the homes A4 and A6 are classified into the group G2; and the home A2 is classified into the group G3. As a result, each of the amounts of group heat consumption of the groups G1, G2, and G3 is 100 kW, meaning that the amounts of group heat consumption of the groups are the same.

FIG. 11 shows an example where the amounts of group heat consumption of all the groups G1, G2, and G3 are completely the same. However, Embodiment 1 is not limited to this. More specifically, a difference (variation) in the amount of group heat consumption between the groups G1, G2, and G3 may only have to be smaller than or equal to a predetermined threshold. It is preferable for the difference in the amount of group heat consumption between the groups to be at a minimum (ideally, 0).

Here, when the difference is "smaller than or equal to a predetermined threshold", this may mean, for example, that the difference between the largest amount of group heat consumption (110 kW, for example) and the smallest amount of group heat consumption (100 kW, for example) is smaller than or equal to a predetermined threshold (10 kW, for example). Or, this may mean that a ratio between the largest amount of group heat consumption (110 kW, for example) and the smallest amount of group heat consumption (100 kW, for example) is smaller than or equal to a predetermined threshold (10%, for example).

Next, the district control device 214 (the operation planning unit 23 shown in FIG. 7) forms the operation plan for the SO period for each of the groups (S240). The operation plans formed here are adjusted so as to allow the total heat consumption in the SO period to be reduced, and also to allow the heat radiation resume times of the groups not to coincide with each other in order to lower the peak in the total heat consumption immediately after the SO end time.

The district control device 214 in Embodiment 1 equally divides the SO period (90 minutes long from 19:00 to 20:30) specified by the SO signal by the number of groups. Then, the district control device 214 forms the operation plan for each group to allow, as the heating devices belonging to a first group resume heat radiation, heat radiation of the heating devices belonging to a second group to be stopped.

In the example shown in FIG. 11, since the number of groups is three (i.e., G1, G2, and G3), the heat radiation OFF period is 30 minutes for each group. For the group G1, the heat radiation stop time is 19:00 and the heat radiation resume time is 19:30. For the group G2, the heat radiation stop time is 19:30 and the heat radiation resume time is 20:00. For the group G3, the heat radiation stop time is 20:00 and the heat radiation resume time is 20:30. Then, the district control device 214 notifies each of the home control devices 204 of the operation plan including the heat radiation stop time and the heat radiation resume time described above.

FIG. 11 shows the example where the amounts of group heat consumption of all the groups are the same. For this reason, the SO period is equally divided by the number of groups, and thus the heat radiation OFF periods (the period from the heat radiation stop time to the heat radiation resume time) of the groups are set to have the same length. However, note that the heat radiation OFF period may be different for each of the groups. For example, in the case where the amount of group heat consumption is different for each of the groups, the SO period may be proportionally distributed according to the reciprocals of the amounts of group heat consumption. For example, suppose that the amounts of group heat consumption of the groups are 50 kW, 100 kW, and 150 kW and that the SO period is 90 minutes long. In this case, the SO period may be divided into periods of 45 minutes, 30 minutes, and 15 minutes as the heat radiation OFF periods. In general, when the amount of heat consumption is larger, the rate of decrease in the room temperature is higher. Thus, by setting the heat radiation OFF period of the group consuming the large amount of heat relatively short, the comfort levels of the groups can be equalized.

Next, each of the home control devices 204 controls the operation of the heating device according to the operation plan received from the district control device 214 (S250). FIG. 12 shows changes in the amount of group heat consumption (indicated by the solid line) and changes in the room temperature (indicated by the dashed-dotted line) for each group in the case where the operations of the heating devices are controlled according to the operation plan shown in FIG. 11. FIG. 13 shows changes in the total amount of heat consumed by the whole heating system (indicated by the solid line). In FIG. 12: the top view shows the changes in the group heat consumption and in the room temperature of the group G1; the middle view shows the changes in the group heat consumption and in the room temperature of the group G2; and the bottom view shows the changes in the group heat consumption and in the room temperature of the group G3.

As shown in FIG. 12, each of the amounts of group heat consumption of the groups G1, G2, and G3 remains constant at 100 kW before the SO start time (19:00). Moreover, as shown in FIG. 13, the total amount of heat consumption of the heating system remains constant at 300 kW. This results from that each of the home control devices 204 causes the heating device to operate in the second mode in order to maintain the room temperature at 20°C.

Next, when 19:00 which is the SO start time (= the heat radiation stop time of the group G1) arrives, each of the home control devices 204 of the homes A1, A3, and A5 belonging to the group G1 switches the operation mode of the heating device from the second mode to the OFF mode (or more specifically, the valve 202 is shut off). As a result, the amount of group heat consumption of the group G1 is reduced to 0, and the room temperatures of the homes A1, A3, and A5 belonging to the group G1 gradually decrease. On the other hand, the heating devices of the homes A2, A4, and A6 belonging to the groups G2 and G3 continue the operations in the second mode. Accordingly, the total amount of heat consumption of the heating system is reduced from 300 kW to 200 kW.

Following this, when 19:30 which is the heat radiation resume time of the groups G1 (= the heat radiation stop time of the group G2) arrives, each of the home control devices 204 of the homes A1, A3, and A5 belonging to the group G1 switches the operation mode of the heating device from the OFF mode to the first mode (or more specifically, the valve 202 is opened). As a result, the amount of group heat consumption of the group G1 increases to 150 kW that is larger than the amount consumed in the second mode, and the room temperatures of the homes A1, A3, and A5 belonging to the group G1 gradually increase.

At the same time, each of the home control devices 204 of the homes A4 and A6 belonging to the group G2 switches the operation mode of the heating device from the second mode to the OFF mode. As a result, the amount of group heat consumption of the group G2 is reduced to 0, and the room temperatures of the homes A4 and A6 belonging to the group G2 gradually decrease. On the other hand, the heating device of the home A2 belonging to the group G3 continues the operation in the second mode.

Accordingly, the total amount of heat consumption of the heating system is increased by the difference (50 kW) between the increase caused by the group G1 (150 kW) and the decrease caused by the group G2 (100 kW). More specifically, the total amount of heat consumption increases from 200 kW to 250 kW at 19:30.

Then, when each of the room temperatures of the homes A1, A3, and A5 belonging to the group G1 reaches the preset temperature (20°C) (19:45 in the example shown in FIG. 12), each of the home control devices 204 switches the operation mode of the heating device from the first mode to the second mode (or more specifically, the opening of the valve 202 is narrowed). As a result, the amount of group heat consumption of the group G1 is reduced from 150 kW to 100 kW, and each of the room temperatures of the homes A1, A3, and A5 belonging to the group G1 is maintained at 20°C. Accordingly, the total amount of heat consumption is reduced from 250 kW to 200 kW.

Next, when 20:00 which is the heat radiation resume time of the groups G2 (= the heat radiation stop time of the group G3) arrives, heat radiation is resumed by each of the heating devices belonging to the group G2 and, at the same time, heat radiation of the heating device belonging to the group G3 is stopped. The process to be performed here is the same as the process performed at 19:30 in FIG. 12 and, therefore, the explanation is not repeated. Moreover, after this, when each of the room temperatures of the homes A4 and A6 belonging to the group G2 reaches the preset temperature (20°C) (20:15 in the example shown in FIG. 12), the operation mode of the heating devices belonging to the group G2 is switched from the first mode to the second mode. The process to be performed here is the same as the process performed at 19:45 in FIG. 12 and, therefore, the explanation is not repeated.

Following this, when 20:30 which is the heat radiation resume time of the groups G3 (= the SO stop time) arrives, the operation mode of the heating device belonging to the group G3 is switched from the OFF mode to the first mode. As a result, the amount of group heat consumption of the group G3 increases to 150 kW, and the room temperature of the home A2 gradually increases. On the other hand, each of the heating devices belonging to the groups G1 and G2 already operates in the second mode. Accordingly, the total amount of heat consumption at this point in time (350 kW) temporarily exceeds the level before the SO start time (300 kW).

Then, when the room temperature of the home A2 belonging to the group G3 reaches the preset temperature (20°C) (20:45 in the example shown in FIG. 12), the operation mode of the heating device belonging to the group G3 is switched from the first mode to the second mode. As a result, the total amount of heat consumption returns to the level before the SO start time (300 kW).

As can be clearly seen from FIG. 13, the total amount of heat consumption during the SO period is always below the level before the SO start time (300 kW). To be more specific, the heating-system control method in Embodiment 1 can effectively reduce the total amount of heat consumed during the SO period.

For example, by setting the peak time periods shown in FIG. 4A as the SO periods, a peak can be effectively prevented from occurring in the amount of heat consumed by the whole housing complex 111 (the total heat consumption). As a result, the district heating supplier 100 can have the advantage of not having to generate heat using a relatively expensive fuel to provide a necessary amount of heat during the peak time period.

In the example shown in FIG. 13, a peak in the total heat consumption occurs for 15 minutes (from 20:30 to 20:45) immediately after the SO end time. However, when all the heating devices of the homes A1 to A6 resume heat radiation at once at the SO end time, the total heat consumption reaches 450 kW. The changes in the total heat consumption in this case are indicated by the chain double-dashed line in FIG. 13. As can be seen from the changes indicated by the chain double-dashed line, in the case where all the heating devices resume heat radiation at the same time, a peak much higher than the peak in Embodiment 1 occurs. To be more specific, the heating-system control method in Embodiment 1 can lower a peak in the total heat consumption occurring immediately after the SO end time. The "shaded area" from 20:30 to 20:45 in FIG. 13 corresponds to a reduction in the peak.

The example in FIG. 12 shows that the amount of group heat consumption is 150 kW when the heating device is caused to operate in the first mode and that the time taken from when heat radiation is resumed to when the room temperature reaches the preset temperature is 15 minutes. However, these are merely examples and thus understandably vary with various factors.

Moreover, the example in FIG. 12 shows that, at 19:30, the heat radiation resume time of the group G1 completely coincides with the heat radiation stop time of the group G2. However, these two times do not necessarily have to be exactly the same time. This also applies to the case between the heat radiation resume time of the group G2 and the heat radiation stop time of the group G3 (20:00).

For example, each of FIG. 12 and FIG. 13 shows as if the amount of heat consumption instantaneoulsy changed. However, in reality, it takes a certain amount of time for the change in the heat consumption to occur. On account of this, the heat radiation resume time of the group G1 and the heat radiation stop time of the group G2 may partially coincide with each other while, for example, the amount of heat consumption is changing.

To be more specific, during a period from when the amount of group heat consumption of the group G1 starts increasing to when this amount reaches 150 kW, the amount of group heat consumption of the group G2 may start decreasing (that is, the heat radiation resume time of the group G1 is slightly earlier). Alternatively, during a period from when the amount of group heat consumption of the group G2 starts decreasing to when this amount reaches 0, the amount of group heat consumption of the group G1 may start increasing (that is, the heat radiation stop time of the group G2 is slightly earlier).

Furthermore, the example in FIG. 12 shows that the preset temperatures of the homes are the same. However, the preset temperature may be different for each of the homes. The example in FIG. 12 also shows that the changes in the temperature of the homes belonging to the respective groups are the same. However, the changes in the room temperature may possibly be different for each of the homes. Thus, in the case where the heating device is caused to operate in the first mode, the time to reach the preset temperature is different for each of the rooms. On this account, the amounts of group heat consumption show stepwise decreases at 19:45 for the group G1, at 20:15 for the group G2, and at 20:45 for the group G3.

Embodiment 1 describes the example where, in Step S220 in FIG. 10, the district control device 214 obtains the amount of heat consumption measured at the time (17:00) when the home control device 204 receives the heat consumption transmission request. However, the preset invention is not limited to this.

Variations of the amount of heat consumption obtained in Step S220 are described as Modifications 1 to 3 below. As a common point in Modifications 1 to 3, each of home control devices 204 in Modifications 1 to 3 selects the amount of heat consumption to be transmitted to a district control device 214, from a history of previously-measured amounts of heat consumption.

### [Modification 1]

A heating-system control method in Modification 1 of Embodiment 1 is described with reference to FIG. 14 and FIG. 15. FIG. 14 is a diagram showing an example of a structure of historical data on heat consumption held by a home control device 204 in Modification 1. FIG. 15 is a flowchart showing an operation performed when the home control device 204 receives a heat consumption transmission request in Modification 1. It should be noted that details of points identical to those in Embodiment 1 are omitted and that points of difference are mainly described.

Firstly, as shown in FIG. 14, the home control device 204 (the operation control unit 24 shown in FIG. 7) measures the amount of heat consumption of the heating device per unit of time. Then, the home control device 204 stores the measured amount of heat consumption into a memory unit (an illustration thereof is omitted). In the example shown in FIG. 14, the amount of heat consumption measured every hour, the outside temperature obtained at the measurement time from an outside temperature sensor 212, and the preset temperature of the heating device at the measurement time are stored in association with each other. Here, the amount of heat consumption stored as in FIG. 14 refers to the heat consumption measured at the current time. However, the stored amount of heat consumption may be an average amount of heat consumption in the corresponding time period or may be a peak amount of heat consumption (the largest heat consumption) in the corresponding time period.

When receiving the heat consumption transmission request from a district control device 214 (S301), the home control device 204 searches the stored history for the amount of heat consumption corresponding to input parameters (S302). Then, the home control device 204 transmits the found amount of heat consumption to the district control device 214 (S303).

Here, the input parameters in Modification 1 are: the SO period (for example, 19:00 which is the SO start time); a predicted outside temperature during the SO period (the outside temperature at 19:00); and the day of the week of the current day (the day when the operation of the heating device is controlled). The district control device 214 transmits the SO period to the home control device 204 by, for example, including the SO period into the heat consumption transmission request. The outside temperature at 19:00 is obtained by the home control device 204 from, for example, weather forecast data. The day of the week of the current day may be included in the heat consumption transmission request, or an internal clock of the home control device 204 may be used.

Then, the home control device 204 extracts the amount of heat consumption stored at the time close to the given input parameters, from the history of previous heat consumptions. In the above example, from among the previous heat consumptions on the days which are the same day of the week given as the input parameter, the home control device 204 selects, for example, the day on which the predicted outside temperature during the SO period (19:00) is the closest to the outside temperature shown in FIG. 14. The home control device 204 then extracts the amount of heat consumption corresponding to the SO period of the selected day. In the present example, 19:00 which is the SO start time is used as the SO period. However, when the SO period is from 19:00 to 20:00, multiple amounts of heat consumption exist in FIG. 14. In this case, an average value of these amounts or a peak value of these amounts (the larger amount) may be transmitted, for example.

When multiple days having the outside temperatures closest to the predicted outside temperature exist, it is preferable to select the day closest in time to the current day (the latest date).

With the above configuration, the amount of heat consumption of the day having the circumstances close to those of the current day can be extracted from the history of previous amounts of heat consumption. This allows the district control device 214 to appropriately perform grouping using the value close to the amount of heat to be actually consumed during the SO period. It should be noted that "the day having the circumstances close to those of the current day" refers specifically to the day which is highly likely to be similar to the current day as follows. When the outside temperature of the selected day is close to the current outside temperature, the selected day is similar to the current day in the amount of usage of the heating device. When the selected day is the same day of the week as the current day, the selected day is similar to the current day in the lifestyle pattern.

In the above example, the outside temperature, the SO period, and the day of the week are used as the input parameters. However, all of these do not necessarily have to be used. In the case where the day of the week is omitted, the day on which the outside temperature during the SO period is the closest to the current outside temperature may be selected from the history, for example. Then, the amount of heat consumption corresponding to the SO period of the selected day may be selected. In the case where the outside temperature is omitted, the amount of heat consumption in the SO period of the same day last week may be extracted, for example.

Moreover, a different input parameter may be used in place of (or in addition to) the above input parameters. For example, in place of (or in addition to) the day of the week, the date of the current day may be included as an input parameter. In this case, the amount of heat consumption in the SO period of the same day last month may be extracted.

### [Modification 2]

Next, Modification 2 of Embodiment 1 is described. In Modification 2, a late night period (such as 3:00 a.m.) is includes as an input parameter in place of the SO period in Modification 1. In the following, details of points identical to those in Modification 1 are omitted and that points of difference are mainly described.

In Modification 1, the amount of heat consumption of the day having the circumstances close to those of the current day can be extracted from the history of previous amounts of heat consumption. However, it is highly possible that, during the SO period, not only the space heating load but the water heating load is consumed as well. In this case, a district control device 214 obtains the amount of heat consumption larger than the actual amount by the water heating load. Here, as shown in FIG. 4A, the space heating load is almost constant in any period throughout the day.

In view of this, in Modification 2, a late night period (such as 3:00 a.m.) is includes as the input parameter in place of the SO period in Modification 1. During the late night period, it is highly likely that the water heating load is not consumed. Even in the case the water heating load is used during the late night period, the amount is likely to be extremely small. Thus, by obtaining the amount of heat consumption during this period, grouping can be performed purely only according to the space heating load.

When receiving a heat consumption transmission request from the district control device 214 (S301), a home control device 204 searches the stored history for the amount of heat consumption corresponding to 3:00 a.m. of the day (S302). Then, the home control device 204 transmits the found amount of heat consumption to the district control device 214 (S303). According to the collected amounts of heat consumption corresponding to 3:00 a.m., the district control device 214 groups the homes.

Modification 2 has an advantageous effect particularly when the home control device 204 cannot separately measure the space heating load and the water heating load. On the other hand, when the home control device 204 can separately measure the space heating load and the water heating load, Modification 1 is more suitable.

### [Modification 3]

Next, Modification 3 of Embodiment 1 is described. In Modification 3, the amount of heat consumption on the coldest day (the day on which the outside temperature is the lowest) is extracted from the history of previous amount of heat consumption, and grouping is performed according to this extracted amount of heat consumption. Heating devices 31 to 36 may be grouped in advance according to this grouping method. With this, grouping does not necessarily need to be performed whenever heat radiation in the SO period is controlled. In the following, details of points identical to those in Modification 1 are omitted and that points of difference are mainly described.

As a typical example, a home control device 204 extracts the amount of heat consumption on the coldest day of last year from the history of previous amount of heat consumption and then transmits the extracted amount to a district control device 214. The amount of heat consumption to be extracted from among the amounts of heat consumption on the coldest day is not particularly limiting. For example, the amount to be extracted may be: the amount of heat consumption corresponding to the SO period as in Modification 1; the amount of heat consumption corresponding to the late night period as in Modification 2; or the largest amount of heat consumption of the day. In other words, the grouping unit 22 in Modification 3 performs grouping only once a year.

Moreover, the coldest day does not need to be selected from the history from last year. For example, the coldest day may be selected from the history from: a previous certain period (such as November to March); last month; or this month. By going further into the past to search for the coldest day, it is increasingly likely that an appropriate amount of heat consumption can be extracted.

### [Embodiment 2]

The following describes a heating-system control method in Embodiment 2, with reference to FIG. 16 to FIG. 18. FIG. 16 is a diagram showing an example of grouping in Embodiment 2. FIG. 17 is a diagram showing an example of changes in the amount of group heat consumption for each group in Embodiment 2. FIG. 18 is a diagram showing an example of changes in the total amount of heat consumed by a heating system in Embodiment 2. It should be noted that details of points identical to those in Embodiment 1 are omitted and that points of difference are mainly described.

The heating-system control method in Embodiment 2 is different from Embodiment 1 in that heating devices consuming similar amounts of heat are classified into the same group in Step S230 in FIG. 10. With this, Embodiment 2 has a group including only heating devices consuming a large amount of heat and a group including only heating devices consuming a small amount of heat.

For example, suppose that a district control device 214 in Embodiment 2 obtains the amount of heat consumption from each of homes A1 to A6 as shown in FIG. 16. Then, the district control device 214 classifies: the home A5 consuming the amount of heat larger than a first threshold (100 kW, for example), into a group G1; the homes A2 and A6 each consuming the amount of heat smaller than or equal to the first threshold and larger than a second threshold (75 kW) smaller than the first threshold, into a group G2; and the homes A1, A3, and A4 each consuming the amount of heat smaller than or equal to the second threshold, into a group G3.

As a result, the amount of group heat consumption of the group G1 is the largest, the amount of group heat consumption of the group G2 is the middle amount, and the amount of group heat consumption of the group G3 is the smallest. Here, "the amount of group heat consumption" in Embodiment 2 refers to an average value of the amounts of heat consumed by the heating devices belonging to the same group.

Next, in Step S240 in FIG. 10, the heating-system control method in Embodiment 2 forms an operation plan for each of the groups so as to allow the times at which the heating devices of the groups are caused to operate in the first mode not to coincide with each other. In other words, the operation plans formed in Embodiment 2 are adjusted to allow, as the heating devices belonging to a first group return to a steady state after heat radiation is resumed (i.e., the first mode is switched to the second mode), heat radiation of the heating devices belonging to a second group different from the first group to be resumed.

In the example shown in FIG. 16, suppose that the SO start time is 19:00 and the SO end time is 19:30. In this case, each of the heat radiation stop times of all the groups G1, G2, and G3 is 19:00, the heat radiation resume time of the group G1 is 19:30, the heat radiation resume time of the group G2 is 19:45, and the heat radiation resume time of the group G3 is 20:00.

To be more specific, in Embodiment 2, heat radiation of all the heating devices are stopped at once at the SO start time and, after the SO end time, heat radiation is resumed by the groups at different times in the order of the amount of group heat consumption from largest to smallest (G1 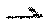 G2 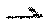 G3). In the example shown in FIG. 16, the heat radiation resume times of the groups are staggered by 15 minutes. However, this staggered period varies according to a time period taken before the temperature of each home reaches the preset temperature.

FIG. 17 shows changes in the amount of group heat consumption (indicated by the solid line) and changes in the room temperature (indicated by the dashed-dotted line) for each group in the case where the operations of the heating devices are controlled according to the operation plan shown in FIG. 16. FIG. 18 shows changes in the total amount of heat consumed by the whole heating system (indicated by the solid line). In FIG. 17: the top view shows the changes in the group heat consumption and in the room temperature of the group G1; the middle view shows the changes in the group heat consumption and in the room temperature of the group G2; and the bottom view shows the changes in the group heat consumption and in the room temperature of the group G3. Normally, changes in the room temperature are different for each of the homes even in the case where these homes belong to the same group. However, for ease of explanation, the following describes the example on the assumption that the changes in the room temperature of the homes belonging to the same group are the same.

As shown in FIG. 17, the amounts of group heat consumption of the groups G1, G2, and G3 remain constant at 135 kW, 90 kW, and 45 kW, respectively, before the SO start time (19:00). Moreover, as shown in FIG. 18, the total amount of heat consumption of the heating system remains constant at 270 kW. This results from that each of the home control devices 204 causes the heating device to operate in the second mode in order to maintain the room temperature at 20°C.

Next, when 19:00 which is the SO start time (= the heat radiation stop time of the groups G1, G2, and G3) arrives, each of the home control devices 204 of all the homes A1 to A6 switches the operation mode of the heating device from the second mode to the OFF mode. As a result, each of the amounts of group heat consumption of the groups G1, G2, and G3 is reduced to 0, and the room temperatures of all the homes A1 to A5 gradually decrease. This state continues until 19:30 which is the SO end time.

Here, the rates of decrease in the room temperature of the homes A1 to A5 (gradients of dashed-dotted lines in FIG. 17) are different for each group. More specifically, the rate of decrease in the room temperature of the home A5 is the highest, the home A5 belonging to the group G1 where the amount of group heat consumption is the largest. The rate of decrease in the room temperature of each of the homes A2 and A6 is the next highest, the homes A2 and A6 belonging to the group G2 where the amount of group heat consumption is the middle amount. The rate of decrease in the room temperature of each of the homes A1, A3, and A4 is the lowest, the homes A1, A3, and A4 belonging to the group G3 where the amount of group heat consumption is the smallest. To be more specific, at the SO end time, the room temperature of the home A5 belonging to the group G1 is the lowest, the room temperature of each of the homes A2 and A6 belonging to the group G2 is the next lowest, and the room temperature of each of the homes A1, A3, and A4 is the highest, as shown in FIG. 17.

Following this, when 19:30 which is the heat radiation resume time of the groups G1 (= the SO end time) arrives, the home control device 204 of the home A5 belonging to the group G1 switches the operation mode of the heating device from the OFF mode to the first mode. As a result, the amount of group heat consumption of the group G1 increases to 270 kW that is larger than the amount consumed in the second mode, and the room temperature of the home A5 belonging to the group G1 gradually increase. Here, the amounts of group heat consumption of the groups G2 and G3 remain at 0. Accordingly, the total amount of heat consumption of the heating system is increased by the increase caused by the group G1 (270 kW). More specifically, the total amount of heat consumption increases from 0 kW to 270 kW at 19:30.

Then, when the room temperature of the home A5 belonging to the group G1 reaches the preset temperature (20°C) (19:45 in the example shown in FIG. 17), the home control device 204 switches the operation mode of the heating device from the first mode to the second mode. As a result, the amount of group heat consumption of the group G1 is reduced from 270 kW to 135 kW, and the room temperature of the home A5 belonging to the group G1 is maintained at 20°C.

At the same time, each of the home control devices 204 of the homes A2 and A6 belonging to the group G2 switches the operation mode of the heating device from the OFF mode to the first mode. As a result, the amount of group heat consumption of the group G2 increases to 180 kW that is larger than the amount consumed in the second mode, and each of the room temperatures of the homes A2 and A6 belonging to the group G2 gradually increases.

Accordingly, the total amount of heat consumption of the heating system is increased by the difference (45 kW) between the increase caused by the group G2 (180 kW) and the decrease caused by the group G1 (135 kW). More specifically, the total amount of heat consumption increases from 270 kW to 315 kW at 19:30.

Then, when each of the room temperatures of the homes A2 and A6 belonging to the group G2 reaches the preset temperature (20°C) (20:00 in the example shown in FIG. 17), the operation mode of the heating devices belonging to the group G2 is switched from the first mode to the second mode and the operation mode of the heating devices belonging to the group G3 is switched from the OFF mode to the first mode. The process to be performed here is the same as the process performed at 19:45 in FIG. 17 and, therefore, the explanation is not repeated. As a result, since the decrease caused by the group G2 (45 kW) and the increase caused by the group G3 (45 kW) offset each other, the total amount of heat consumption of the heating system remains unchanged.

Next, when each of the room temperatures of the homes A1, A3, and A4 belonging to the group G3 reaches the preset temperature (20°C) (20:15 in the example shown in FIG. 17), the operation mode of the heating devices belonging to the group G3 is switched from the first mode to the second mode. As a result, the total amount of heat consumption of the heating system returns to the level before the SO start time (270 kW).

In Embodiment 2, heat radiation of all the heating devices is stopped during the SO period. Therefore, the amount of decrease in the total heat consumption in the SO period is much larger than the amount of decrease in Embodiment 1. Moreover, by staggering the heat radiation resume times of the groups, a peak in the total heat consumption can be effectively prevented from occurring immediately after the SO end time.

To be more specific, in Embodiment 2, as the heating devices belonging to the group that resumes heat radiation earlier return to a steady state (i.e., the first mode is switched to the second mode), heat radiation is resumed by a next group. Then, the amount of decrease in the group heat consumption of the group resuming heat radiation earlier is offset by the amount of increase in the group heat consumption of the next group. As a result, a peak in the total heat consumption immediately after the SO end time can be reduced. It should be noted that, as in Embodiment 1, the time when the group resuming heat radiation earlier returns to the steady state does not have to be exactly the same as the time when the next group resumes heat radiation.

As can be seen from FIG. 17, each of the rates of decrease in the room temperature of the homes A1 to A6 is higher than the case described in Embodiment 1. Thus, the user comfort level is lower than in Embodiment 1. However, in Embodiment 2, heat radiation is resumed by the groups in the order of the amount of group heat consumption from largest to smallest (i.e., resumed firstly by the group having the highest rate of decrease in the room temperature). This can effectively prevent the room temperature of the home belonging to a specific group from extremely decreasing. Accordingly, the comfort levels in the whole heating system can be equalized.

### [Other Embodiments]

Although the present invention has been described by way of Embodiments above, it should be obvious that the present invention is not limited to Embodiments described above. The present invention includes the following embodiments as well.

Each of the above-described devices may be, specifically speaking, a computer system configured with a microprocessor, a ROM, a RAM, a hard disk unit, a display unit, a keyboard, a mouse, and so forth. The RAM or the hard disk unit stores a computer program. The microprocessor operates according to the computer program, so that each function of the devices is carried out. Here, note that the computer program includes a plurality of instruction codes indicating instructions to be given to the computer so as to achieve a specific function.

Some or all of the structural elements included in each of the above-described multi-input noise suppression devices 1000, 1000A, and 1000B may be realized as a single system Large Scale Integration (LSI). The system LSI is a super multifunctional LSI manufactured by integrating a plurality of structural elements onto a signal chip. To be more specific, the system LSI is a computer system configured with a microprocessor, a ROM, a RAM, and so forth. The RAM stores a computer program. The microprocessor operates according to the computer program, so that a function of the system LSI is carried out.

Some or all of the structural elements included in each of the devices may be implemented as an IC card or a standalone module that can be inserted into and removed from the corresponding device. The IC card or the module is a computer system configured with a microprocessor, a ROM, a RAM, and so forth. The IC card or the module may include the aforementioned super multifunctional LSI. The microprocessor operates according to the computer program, so that a function of the IC card or the module is carried out. The IC card or the module may be tamper resistant.

The present invention may be the methods described above. Each of the methods may be a computer program causing a computer to execute the steps included in the method. Moreover, the present invention may be a digital signal of the computer program.

Moreover, the present invention may be a computer program or digital signal recorded on a computer-readable recording medium, such as a flexible disk, a hard disk, a CD-ROM, an MO, a DVD, a DVD-ROM, a DVD-RAM, a Blu-ray Disc (BD), or a semiconductor memory. Also, the present invention may be the digital signal recorded on such a recording medium.

Furthermore, the present invention may be the aforementioned computer program or digital signal transmitted via a telecommunication line, a wireless or wired communication line, a network represented by the Internet, and data broadcasting.

Also, the present invention may be a computer system including a microprocessor and a memory. The memory may store the aforementioned computer program and the microprocessor may operate according to the computer program.

Moreover, by transferring the recording medium having the aforementioned program or digital signal recorded thereon or by transferring the aforementioned program or digital signal via the aforementioned network or the like, the present invention may be implemented by a different independent computer system.

Embodiments described above and modifications may be combined.

Embodiments according to the present invention have been described thus far with reference to the drawings. However, Embodiments shown in the drawings are not intended to limit the scope of the present invention. Various changes and modifications can be made to Embodiments shown in the drawings, unless such changes and modifications depart from the scope of the present invention or from the meanings equivalent to the scope of the present invention.

### [Industrial Applicability]

The present invention is used with advantage as a heating system including a plurality of heating devices.

### [Reference Signs List]

- 10: Heating system
- 20: Control unit
- 21: Obtainment unit
- 22: Grouping unit
- 23: Operation planning unit
- 24: Operation control unit
- 31, 32, 33, 34, 35, 36: Heating device
- 100: District heating supplier
- 101: Factory
- 102: Electric power plant
- 110: District heating consumer
- 111: Housing complex
- 201: Radiator
- 202: Valve
- 203: Room temperature sensor
- 204: Home control unit
- 210: Heat exchanger
- 211: Calorimeter
- 212: Pump
- 213: Outside temperature sensor
- 214: District control unit

## Claims

1. A heating-device control method of controlling heating devices (31-36) each of which radiates heat supplied from a heat supply source according to an operation plan, wherein the heating devices (31-36) are grouped into groups, and each heating device belongs to one of said groups, the heating-device control method comprising:
obtaining, from the heat supply source, a heat radiation reduction instruction indicating a heat radiation reduction period during which a total heat consumption is to be reduced, the total heat consumption being a sum of amounts of heat consumed by the heating devices (31-36);
forming the operation plan of the heating devices for each of the groups, when the heat radiation reduction instruction is obtained in the obtaining; and
notifying each of control units included in the heating devices of the operation plan formed for each of the groups in the forming,
wherein, in the forming, the operation plan including information indicating a heat radiation stop time and a heat radiation resume time is formed for each of the groups to allow (i) the total heat consumption during the heat radiation reduction period to be reduced and (ii) the heat radiation resume times of the groups not to coincide with each other.

2. The heating-device control method according to Claim 1, further comprising
grouping the heating devices into the groups by classifying each of the heating devices into one of the groups according to an amount of heat consumption obtained from the heating device.

3. The heating-device control method according to Claim 2,
wherein, in the grouping:
an amount of group heat consumption is calculated for each of the groups, the amount of group heat consumption being a sum of amounts of heat consumed by the heating devices belonging to the group; and
the heating devices are grouped into the groups to allow a difference in the amount of group heat consumption between the groups to be smaller than a predetermined threshold.

4. The heating-device control method according to Claim 3, wherein, in the forming, the operation plan is formed for each of the groups to allow, as the heating devices belonging to a first group included in the groups resume heat radiation, heat radiation of the heating devices belonging to a second group different from the first group to be stopped.

5. The heating-device control method according to Claim 2, wherein, in the grouping, a heating device that is included in the heating devices and consumes an amount of heat larger than a predetermined threshold is classified into a first group and a heating device that is included in the heating devices and consumes an amount of heat smaller than or equal to the predetermined threshold is classified into a second group.

6. The heating-device control method according to Claim 5, wherein, in the forming, the operation plan is formed for each of the groups to allow, as the heating device belonging to the first group returns to a steady state after heat radiation is resumed, heat radiation of the heating device belonging to the second group to be stopped.

7. The heating-device control method according to any one of Claims 2 to 6, wherein, in the grouping, each of the heating devices is classified into one of the groups according to the amount of heat consumption measured when the heat radiation reduction instruction is obtained in the obtaining.

8. The heating-device control method according to any one of Claims 2 to 6, wherein, in the grouping, each of the heating devices is classified into one of the groups according to the amount of heat consumption during the heat radiation reduction period of a day on which circumstances are similar to circumstances of a current day, the amount of heat consumption being included in a history of previous amounts of heat consumption.

9. The heating-device control method according to any one of Claims 2 to 6, wherein, in the grouping, each of the heating devices is classified into one of the groups according to the amount of heat consumption during a late night period of a day on which circumstances are similar to circumstances of a current day, the amount of heat consumption being included in a history of previous amounts of heat consumption.

10. The heating-device control method according to any one of Claims 2 to 6, wherein, in the grouping, each of the heating devices is classified into one of the groups according to the amount of heat consumption on a coldest day, the amount of heat consumption being included in a history of previous amounts of heat consumption.

11. A control device configured for controlling heating devices (31-36) each of which radiates heat supplied from a heat supply source according to an operation plan, wherein the heating devices (31-36) are grouped into groups, and each heating device belongs to one of said groups, the control device comprising:
an obtainment unit (21) configured to obtain, from the heat supply source, a heat radiation reduction instruction indicating a heat radiation reduction period during which a total heat consumption is to be reduced, the total heat consumption being a sum of amounts of heat consumed by the heating devices;
an operation planning unit (23) configured to form the operation plan of the heating devices for each of the groups when the heat radiation reduction instruction is obtained by the obtainment unit; and
a notification unit configured to notify each of control units included in the heating devices of the operation plan formed for each of the groups by the operation planning unit (23),
wherein the operation planning unit (23) is configured to form, for each of the groups, the operation plan including information indicating a heat radiation stop time and a heat radiation resume time, to allow (i) the total heat consumption during the heat radiation reduction period to be reduced and (ii) the heat radiation resume times of the groups not to coincide with each other.

## Patentansprüche

1. Erwärmungsvorrichtungs-Steuerverfahren zur Steuerung von Erwärmungsvorrichtungen (31-36), wobei jede davon Wärme abstrahlt, die von einer Wärmezufuhrquelle gemäß einem Betriebsplan zugeführt wird, wobei die Erwärmungsvorrichtungen (31-36) in Gruppen gruppiert sind und jede Erwärmungsvorrichtung zu einer dieser Gruppen gehört, wobei das Erwärmungsvorrichtungs-Steuerverfahren umfasst:
Empfang, von der Wärmezufuhrquelle, einer Wärmeabstrahlungs-Verringerungsanweisung, die eine Wärmeabstrahlungs-Verringerungsdauer angibt, während der der gesamte Wärmeverbrauch zu verringern ist, wobei der gesamte Wärmeverbrauch die Summe der von den Erwärmungsvorrichtungen (31-36) verbrauchten Wärmemengen ist;
Erstellung des Betriebsplans der Erwärmungsvorrichtungen für jede der Gruppen, wenn die Wärmeabstrahlungs-Verringerungsanweisung während des Empfangs erhalten wird; und
Mitteilen des Betriebsplans, der für jede der Gruppen bei der Erstellung erstellt wurde, einer jeden der in den Erwärmungsvorrichtungen eingeschlossenen Steuereinheiten,
wobei bei der Erstellung ein Betriebsplan, der Information einschließt, die eine Wärmeabstrahlungs-Stoppzeit und eine Wärmeabstrahlungs-Wiederaufnahmezeit anzeigt, für jede der Gruppen erstellt wird, um zu ermöglichen, dass (i) der gesamte Wärmeverbrauch während der Wärmeabstrahlungs-Verringerungsdauer verringert wird und (ii) die Wärmeabstrahlungs-Wiederaufnahmezeiten der Gruppen nicht miteinander zusammenfallen.

2. Erwärmungsvorrichtungs-Steuerverfahren nach Anspruch 1, des Weiteren umfassend:
Gruppieren der Erwärmungsvorrichtungen in Gruppen durch die Klassifizierung jeder der Erwärmungsvorrichtungen in eine der Gruppen gemäß der Menge des von der Erwärmungsvorrichtung erhaltenen Wärmemengenverbrauchs.

3. Erwärmungsvorrichtungs-Steuerverfahren nach Anspruch 2,
wobei, beim Gruppieren:
die Menge des Gruppenwärmeverbrauchs für jede der Gruppen berechnet wird, wobei die Menge des Gruppenwärmeverbrauchs die Summe der durch die zu dieser Gruppe gehörenden Erwärmungsvorrichtungen verbrauchten Mengen an Wärme ist; und
die Erwärmungsvorrichtungen in Gruppen gruppiert werden, um einen Unterschied in der Menge des Gruppenwärmeverbrauchs zwischen den Gruppen zu ermöglichen, der kleiner als ein vorgegebener Schwellenwert ist.

4. Erwärmungsvorrichtungs-Steuerverfahren nach Anspruch 3, wobei, bei der Erstellung, für jede der Gruppen ein Betriebsplan erstellt wird, um zu ermöglichen, dass, wenn die zu einer ersten Gruppe, die in den Gruppen eingeschlossen ist, gehörenden Erwärmungsvorrichtungen die Wärmeabstrahlung wieder aufnehmen, die Wärmeabstrahlung der Erwärmungsvorrichtungen, die zu einer zweiten Gruppe gehören, die von der ersten Gruppe verschieden ist, angehalten wird.

5. Erwärmungsvorrichtungs-Steuerverfahren nach Anspruch 2, wobei, bei der Gruppierung, eine Erwärmungsvorrichtung, die in den Erwärmungsvorrichtungen eingeschlossen ist, und eine Menge an Wärme verbraucht, die größer als ein vorgegebener Schwellenwert ist, in eine erste Gruppe klassifiziert wird, und eine Erwärmungsvorrichtung, die in den Erwärmungsvorrichtungen eingeschlossen ist, und eine Menge an Wärme verbraucht, die kleiner oder gleich als ein vorgegebener Schwellenwert ist, in eine zweiten Gruppe klassifiziert wird.

6. Erwärmungsvorrichtungs-Steuerverfahren nach Anspruch 5, wobei, bei der Erstellung, für jede der Gruppen ein Betriebsplan erstellt wird, um zu ermöglichen, dass, wenn die zu einer ersten Gruppe gehörende Erwärmungsvorrichtung zu einem Steady-State-Zustand zurückkehrt, nachdem die Wärmeabstrahlung wieder aufgenommen wurde, die Wärmeabstrahlung der Erwärmungsvorrichtung, die zu der zweiten Gruppe gehört, angehalten wird.

7. Erwärmungsvorrichtungs-Steuerverfahren nach einem der Ansprüche 2 bis 6, wobei, beim Gruppieren, jede der Erwärmungsvorrichtungen gemäß der Menge des gemessenen Wärmeverbrauchs in eine der Gruppen klassifiziert wird, wenn die Wärmeabstrahlungs-Verringerungsanweisung beim Empfang erhalten wird.

8. Erwärmungsvorrichtungs-Steuerverfahren nach einem der Ansprüche 2 bis 6, wobei, beim Gruppieren, jede der Erwärmungsvorrichtungen gemäß der Menge des Wärmeverbrauchs während der Wärmeabstrahlungs-Verringerungsdauer eines Tages, an dem die Umstände den Umständen eines laufenden Tages gleichen, in eine der Gruppen klassifiziert wird, wobei die Menge des Wärmeverbrauchs in einem Verlauf früherer Wärmeverbrauchsmengen enthalten ist.

9. Erwärmungsvorrichtungs-Steuerverfahren nach einem der Ansprüche 2 bis 6, wobei, beim Gruppieren, jede der Erwärmungsvorrichtungen gemäß der Menge des Wärmeverbrauchs während einer Spätnacht-Periode eines Tages, an dem die Umstände den Umständen eines laufenden Tages gleichen, in eine der Gruppen klassifiziert wird, wobei die Menge des Wärmeverbrauchs in einem Verlauf früherer Wärmeverbrauchsmengen enthalten ist.

10. Erwärmungsvorrichtungs-Steuerverfahren nach einem der Ansprüche 2 bis 6, wobei, beim Gruppieren, jede der Erwärmungsvorrichtungen gemäß der Menge des Wärmeverbrauchs an einem kältesten Tag in eine der Gruppen klassifiziert wird, wobei die Menge des Wärmeverbrauchs in einem Verlauf früherer Wärmeverbrauchsmengen enthalten ist.

11. Steuervorrichtung, gestaltet
zur Steuerung von Erwärmungsvorrichtungen (31-36), wobei jede davon Wärme abstrahlt, die von einer Wärmezufuhrquelle gemäß einem Betriebsplan zugeführt wird, wobei die Erwärmungsvorrichtungen (31-36) in Gruppen gruppiert sind und jede Erwärmungsvorrichtung zu einer dieser Gruppen gehört, wobei die Steuereinrichtung umfasst:
eine Empfangseinheit (21), gestaltet, um von der Wärmezufuhrquelle eine Wärmeabstrahlungs-Verringerungsanweisung zu empfangen, die eine Wärmeabstrahlungs-Verringerungsdauer angibt, während der der gesamte Wärmeverbrauch zu verringern ist, wobei der gesamte Wärmeverbrauch die Summe der von den Erwärmungsvorrichtungen verbrauchten Wärmemengen ist;
eine Betriebsplanungseinheit (23), gestaltet, um den Betriebsplan der Erwärmungsvorrichtungen für jede der Gruppen zu erstellen, wenn die Wärmeabstrahlungs-Verringerungsanweisung von der Empfangseinheit empfangen wird; und
eine Mitteilungseinheit, gestaltet, um jeder der in den Erwärmungsvorrichtungen eingeschlossenen Steuereinheiten den für jede der Gruppen von der Betriebsplanungseinheit (23) erstellten Betriebsplan mitzuteilen,
wobei die Betriebsplanungseinheit (23) gestaltet ist, um für jede der Gruppen den Betriebsplan zu erstellen, der Information einschließt, die eine Wärmeabstrahlungs-Stoppzeit und eine Wärmeabstrahlungs-Wiederaufnahmezeit anzeigt, um zu ermöglichen, dass (i) der gesamte Wärmeverbrauch während der Wärmeabstrahlungs-Verringerungsdauer verringert wird und (ii) die Wärmeabstrahlungs-Wiederaufnahmezeiten der Gruppen nicht miteinander zusammenfallen.

## Revendications

1. Procédé de commande de dispositifs de chauffage consistant à commander des dispositifs de chauffage (31 à 36) dont chacun rayonne de la chaleur délivrée à partir d'une source d'alimentation en chaleur en fonction d'un plan d'opérations, les dispositifs de chauffage (31 à 36) étant réunis en groupes et chaque dispositif de chauffage appartenant à l'un desdits groupes, le procédé de commande de dispositifs de chauffage comprenant :
la récupération, à partir de la source d'alimentation en chaleur, d'une instruction de réduction de rayonnement de chaleur indiquant une période de réduction du rayonnement de chaleur pendant laquelle la consommation totale de chaleur doit être réduite, la consommation totale de chaleur étant la somme des quantités de chaleur consommées par les dispositifs de chauffage (31 à 36),
la formation du plan d'opérations des dispositifs de chauffage pour chacun des groupes lorsque l'instruction de réduction de rayonnement de chaleur est obtenue lors de l'étape de récupération, et
la notification faite à chacune des unités de commande incluse dans le dispositif de chauffage du plan d'opérations formé pour chacun des groupes lors de l'étape de formation,
dans lequel, lors de l'étape de formation, le plan d'opérations incluant des informations indiquant un instant d'arrêt de rayonnement de chaleur et un instant de reprise de rayonnement de chaleur est formé pour chacun des groupes afin de permettre (i) la réduction de la consommation totale de chaleur pendant la période de réduction de rayonnement de chaleur et (ii) l'absence de coïncidence mutuelle entre chacun des instants de reprise de rayonnement de chaleur des groupes.

2. Procédé de commande de dispositifs de chauffage selon la revendication 1, comprenant en outre :
la réunion des dispositifs de chauffage en groupes en classant chacun des dispositifs de chauffage dans l'un des groupes en fonction de la valeur de consommation de chaleur obtenue du dispositif de chauffage.

3. Procédé de commande de dispositifs de chauffage selon la revendication 2,
dans lequel, lors de l'étape de réunion :
la valeur de la consommation de chaleur de groupe est calculée pour chacun des groupes, la valeur de consommation de chaleur de groupe étant la somme des quantités de chaleur consommée par les dispositifs de chauffage appartenant au groupe, et
les dispositifs dé chauffage sont réunis en groupes afin de permettre à la différence de valeurs de consommation de chaleur de groupe entre les groupes d'être inférieure à un seuil prédéterminé.

4. Procédé de commande de dispositifs de chauffage selon la revendication 3, dans lequel, lors de l'étape de formation, le plan d'opérations est formé pour chacun des groupes dans le but de permettre, alors que les dispositifs de chauffage appartenant à un premier groupe inclus dans les groupes reprennent le rayonnement de chaleur, d'arrêter le rayonnement de chaleur des dispositifs de chauffage appartenant à un second groupe différent du premier groupe.

5. Procédé de commande de dispositifs de chauffage selon la revendication 2, dans lequel, lors de l'étape de réunion, un dispositif de chauffage qui est inclus dans les dispositifs de chauffage et qui consomme une quantité de chaleur plus grande qu'un seuil prédéterminé est classé dans le premier groupe, et un dispositif de chauffage qui est inclus dans les dispositifs de chauffage et qui consomme une quantité de chaleur inférieure ou égale au seuil prédéterminé est classé dans un second groupe.

6. Procédé de commande de dispositifs de chauffage selon la revendication 5, dans lequel, lors de l'étape de formation, le plan d'opérations est formé pour chacun des groupes dans le but de permettre, alors que le dispositif de chauffage appartenant au premier groupe revient à un état permanent après la reprise du rayonnement de chaleur, d'arrêter le rayonnement de chaleur du dispositif de chauffage appartenant au second groupe.

7. Procédé de commande de dispositifs de chauffage selon l'une quelconque des revendications 2 à 6, dans lequel, lors de l'étape de réunion, chacun des dispositifs de chauffage est classé dans l'un des groupes en fonction de la valeur de consommation de chaleur mesurée quand l'instruction de réduction de rayonnement de chaleur est obtenue lors de l'étape de récupération.

8. Procédé de commande de dispositifs de chauffage selon l'une quelconque des revendications 2 à 6, dans lequel, lors de l'étape de réunion, chacun des dispositifs de chauffage est classé dans l'un des groupes en fonction de la valeur de consommation de chaleur pendant la période de réduction de rayonnement de chaleur d'une journée pendant laquelle les circonstances sont semblables aux circonstances du jour présent, la valeur de consommation de chaleur étant incluse dans un historique des précédentes valeurs de consommation de chaleur.

9. Procédé de commande de dispositifs de chauffage selon l'une quelconque des revendications 2 à 6, dans lequel, lors de l'étape de réunion, chacun des dispositifs de chauffage est classé dans l'un des groupes en fonction de la valeur de consommation de chaleur pendant une période de fin de soirée d'une journée pendant laquelle les circonstances sont semblables aux circonstances du jour présent, la valeur de consommation chaleur consommée étant incluse dans un historique des précédentes valeurs de consommation de chaleur.

10. Procédé de commande de dispositifs de chauffage selon l'une quelconque des revendications 2 à 6, dans lequel, lors de l'étape de réunion, chacun des dispositifs de chauffage est classé dans l'un des groupes en fonction de la valeur de consommation de chaleur sur la journée la plus froide, la valeur de consommation de chaleur étant incluse dans un historique des précédentes valeurs de consommation de chaleur.

11. Dispositif de commande configuré pour commander des dispositifs de chauffage (31 à 36) dont chacun rayonne de la chaleur délivrée à partir d'une source d'alimentation en chaleur en fonction d'un plan d'opérations, les dispositifs de chauffage (31 à 36) étant réunis en groupes et chaque dispositif de chauffage appartenant à l'un desdits groupes, le dispositif de commande comprenant :
une unité de récupération (21) configurée pour récupérer, à partir de la source d'alimentation en chaleur, une instruction de réduction de rayonnement de chaleur indiquant une période de réduction du rayonnement de chaleur pendant laquelle la consommation totale de chaleur doit être réduite, la consommation totale de chaleur étant la somme des quantités de chaleur consommées par les dispositifs de chauffage,
une unité de planification des opérations (23) configurée pour former le plan d'opérations des dispositifs de chauffage pour chacun des groupes lorsque l'instruction de réduction de rayonnement de chaleur est obtenue par l'unité de récupération, et
une unité de notification configurée pour notifier à chacune des unités de commande incluse dans le dispositif de chauffage le plan d'opérations formé pour chacun des groupes par l'unité de planification des opérations (23),
dans lequel, l'unité de planification des opérations (23) est configurée pour former, pour chacun des groupes, le plan d'opérations incluant des informations indiquant un instant d'arrêt du rayonnement de chaleur et un instant de reprise du rayonnement de chaleur afin de permettre (i) la réduction de la consommation totale de chaleur pendant la période de réduction de rayonnement de chaleur et (ii) l'absence de coïncidence mutuelle entre chacun des instants de reprise de rayonnement de chaleur des groupes.
